# EUROPEAN PATENT APPLICATION

(11) **EP 4 424 726 A1**
(43) Date of publication of application: **04.09.2024**
(21) Application number: 22886978.0
(22) Date of filing: 25.10.2022
(51) Int. Cl.: C08F 212/36, C08F 2/18, C08F 2/44, B01J 13/14

(54) **HOLLOW PARTICLE, METHOD FOR PRODUCING HOLLOW PARTICLE, RESIN COMPOSITION, AND MOLDED BODY**

(30) Priority: 29.10.2021 JP 2021177264; 29.10.2021 JP 2021177265
(71) Applicant: Zeon Corporation, Tokyo 100-8246 (JP)
(72) Inventor: YAGYU, Sakyo, Tokyo 100-8246 (JP)
(74) Representative: Kraus & Lederer PartGmbB
(86) International application number: PCT/JP2022/039609
(87) International publication number: WO 2023/074651

(57) **Abstract**

To provide hollow particles excellent in dielectric property and solvent resistance and able to decrease the permittivity and dielectric dissipation factor of a resin molded body, and a method for producing the hollow particles. Hollow particles which comprise a shell containing a resin and a hollow portion surrounded by the shell and which have a void ratio of 50% or more, wherein the shell contains, as the resin, a polymer in which 70% by mass or more of a crosslinkable hydrocarbon monomer unit is contained, and wherein, in a hollow particle immersion test in which a mixture obtained by adding 0.1 mg of the hollow particles to 4 mL of toluene and shaking them for 10 minutes at a shaking rate of 100 rpm, is left to stand for 48 hours in an environment at 25°C, less than 5% by mass of the hollow particles submerge in the toluene.

## Description

### Technical Field

The disclosure relates to hollow particles, a method for producing hollow particles, a resin composition, and a molded body.

### Background Art

Hollow particles (hollow resin particles) have a hollow in their interior. Accordingly, they are added and used in resins, coating materials, various kinds of molded bodies and so on, for the purpose of weight saving, heat insulation, permittivity reduction, etc. Their application covers a wide range of fields, such as automobiles, aviation, electric, electronics, architecture, household appliances, containers, stationery products, tools and footwear.

In the electric or electronics field, there is an attempt to add hollow particles to insulation materials for the purpose of decreasing the permittivity and dielectric dissipation factor of the insulation materials. Patent Document 1 discloses hollow particles produced by emulsion polymerization using an acrylic resin. Since hollow particles having an acrylic resin shell are relatively high in relative permittivity and dielectric dissipation factor, there is a problem that a permittivity and dielectric dissipation factor decreasing effect is not sufficiently obtained.

Accordingly, to decrease the permittivity and the dielectric dissipation factor, the production of hollow particles using a styrenic resin is implemented. For example, Patent Document 2 discloses hollow particles in which the shell portion contains an aromatic polymer (P1) that is obtained by polymerizing a monomer composition containing an aromatic crosslinkable monomer (a), an aromatic monofunctional monomer (b) and a (meth)acrylic acid ester monomer (c) having a specific structure.

### Citation List

### [Patent Documents]

Patent Document 1: Japanese Patent Application Laid-Open (JP-A) No. 2010-149024
Patent Document 2: International Publication No. WO2021/085189

### Summary of Invention

### Technical Problem

In recent years, thermosetting modified polyphenylene ether (PPE) is focused on as an insulation resin low in relative permittivity and dielectric dissipation factor. However, even though the hollow particles disclosed in Patent Document 2 are contained in a resin film formed by use of thermosetting modified polyphenylene ether, as shown in Comparative Example 4 described later, the effect of decreasing the permittivity and the dielectric dissipation factor by the hollow particles cannot be sufficiently obtained. A resin film formed by use of a thermosetting resin is generally obtained by heating a coating film of a resin composition obtained by dissolving a thermosetting resin in a solvent. Accordingly, it is estimated that the organic solvent of the resin composition penetrates the shell of hollow particles, enters the interior of the particles, and remains in the interior even after heat curing, thereby decreasing the percentage of the gas in the interior of the hollow portion. As a result, the permittivity and dielectric dissipation factor decreasing effect is insufficient.

An object of the present disclosure is to provide the following: hollow particles excellent in dielectric property and solvent resistance and configured to decrease the permittivity and dielectric dissipation factor of a resin molded body; a method for producing hollow particles excellent in dielectric property and solvent resistance; a resin composition comprising the hollow particles; and a molded body of a resin composition comprising the hollow particles.

### Solution to Problem

The present inventor focused on the resin composition and toluene permeability of the shell of hollow particles and found the following: hollow particles in which the shell is made less toluene permeable by incorporating a large amount of crosslinkable hydrocarbon monomer units in the shell and adjusting the method for forming the shell, are excellent in dielectric property and solvent resistance, and when the hollow particles are added to a resin composition containing an organic solvent, an excellent effect of decreasing the permittivity and dielectric dissipation factor of a resin molded body, is obtained.

According to the present disclosure, hollow particles are provided, which comprise a shell containing a resin and a hollow portion surrounded by the shell and which have a void ratio of 50% or more,
wherein the shell contains, as the resin, a polymer in which 70% by mass or more of a crosslinkable hydrocarbon monomer unit is contained, and
wherein, in a hollow particle immersion test in which a mixture obtained by adding 0.1 mg of the hollow particles to 4 mL of toluene and shaking them for 10 minutes at a shaking rate of 100 rpm, is left to stand for 48 hours in an environment at 25°C, less than 5% by mass of the hollow particles submerge in the toluene.

In the hollow particles of the present disclosure, a dielectric dissipation factor at a frequency of 1 GHz is preferably 0.0010 or less.

In the hollow particles of the present disclosure, the void ratio is preferably 60% or more.

In the hollow particles of the present disclosure, a volume average particle diameter is preferably 1.0 um or more and 10.0 um or less.

The present inventor also found that in the case of producing hollow particles by suspension polymerization using a crosslinkable hydrocarbon monomer, hollow particles excellent in dielectric property and solvent resistance are obtained by adding a specific reaction promoting liquid during a polymerization reaction.

According to the present disclosure, a method for producing hollow particles which comprise a shell containing a resin and a hollow portion surrounded by the shell and which have a void ratio of 50% or more, is provided, the method comprising:
preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
preparing a precursor composition containing precursor particles which have a hollow portion surrounded by a shell containing a resin and which include the hydrophobic solvent in the hollow portion, by subjecting the suspension to a polymerization reaction,
wherein, in 100% by mass of the polymerizable monomer contained in the mixture liquid, a content of a crosslinkable hydrocarbon monomer is 70% by mass or more, and
wherein, in the preparation of the precursor composition, a reaction promoting liquid is added during the polymerization reaction; the polymerization reaction is then further continued; and as the reaction promoting liquid, a low-molecular compound in which a solubility in water at 20°C is larger than that of the hydrophobic solvent and is from 0.5 g/L to 1000 g/L, is used.

In the hollow particle production method of the present disclosure, when an unreactive low-molecular compound is added as the reaction promoting liquid, with respect to a total mass (100 parts by mass) of the polymerizable monomer and hydrophobic solvent contained in the mixture liquid, an amount of the added unreactive low-molecular compound is preferably from 1 part by mass to 20 parts by mass, and when a reactive low-molecular compound is added as the reaction promoting liquid, with respect to the total mass (100 parts by mass) of the polymerizable monomer and hydrophobic solvent contained in the mixture liquid, an amount of the added reactive low-molecular compound is preferably from 1 part by mass to 3 parts by mass.

In the hollow particle production method of the present disclosure, in the preparation of the precursor composition, the reaction promoting liquid is preferably added when a polymerization conversion rate of the polymerizable monomer contained in the mixture liquid is from 40% to 90%.

In the hollow particle production method of the present disclosure, the hydrophobic solvent is preferably a chain hydrocarbon solvent.

In the hollow particle production method of the present disclosure, the polymerization initiator is preferably an organic peroxide.

According to the present disclosure, a resin composition comprising the hollow particles of the present disclosure and a matrix resin is provided.

According to the present disclosure, a molded body of a resin composition comprising the hollow particles of the present disclosure and a matrix resin is provided.

### Advantageous Effects of Invention

According to the present disclosure described above, hollow particles excellent in dielectric property and solvent resistance and configured to decrease the permittivity and dielectric dissipation factor of a resin molded body, are provided; moreover, a method for producing hollow particles excellent in dielectric property and solvent resistance, is provided.

In addition, according to the present disclosure described above, a resin composition comprising the hollow particles and a molded body of a resin composition comprising the hollow particles are provided.

### Brief Description of Drawings

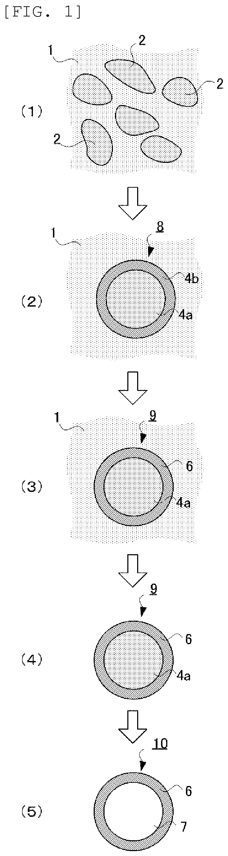

[FIG. 1] A diagram illustrating an example of the method for producing the hollow particles of the present disclosure.

### Description of Embodiments

In the present disclosure, "to" which shows a numerical range is used to describe a range in which the numerical values described before and after "to" indicate the lower limit value and the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

Also in the present disclosure, "hydrocarbon monomer" is a polymerizable monomer composed of the elements carbon and hydrogen, and "crosslinkable hydrocarbon monomer" is a polymerizable monomer containing two or more polymerizable functional groups and composed of the elements carbon and hydrogen.

Also in the present disclosure, "excellent in dielectric property" means low relative permittivity and dielectric dissipation factor, and lower relative permittivity and dielectric dissipation factor means better dielectric property.

Hereinafter, the method for producing the hollow particles of the present disclosure and the hollow particles of the present disclosure will be described in this order; moreover, the resin composition and molded body comprising the hollow particles of the present disclosure will be described.

### 1. Hollow particle production method

The hollow particle production method of the present disclosure is a method for producing hollow particles which comprise a shell containing a resin and a hollow portion surrounded by the shell and which have a void ratio of 50% or more,
the method comprising:
preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
preparing a precursor composition containing precursor particles which have a hollow portion surrounded by a shell containing a resin and which include the hydrophobic solvent in the hollow portion, by subjecting the suspension to a polymerization reaction,
wherein, in 100% by mass of the polymerizable monomer contained in the mixture liquid, the content of a crosslinkable hydrocarbon monomer is 70% by mass or more, and
wherein, in the preparation of the precursor composition, a reaction promoting liquid is added during the polymerization reaction; the polymerization reaction is then further continued; and as the reaction promoting liquid, a low-molecular compound in which a solubility in water at 20°C is larger than that of the hydrophobic solvent and is from 0.5 g/L to 1000 g/L, is used.

The production method of the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

According to the production method of the present disclosure, the hollow particles excellent in dielectric property and solvent resistance can be obtained by, in the above-described basic technique, increasing the percentage of the crosslinkable hydrocarbon monomer in the polymerizable monomer and adding the above-specified reaction promoting liquid during the polymerization reaction.

In the production method of the present disclosure, the shell in which the percentage of hydrocarbon is large, is formed since, in 100% by mass of the polymerizable monomer contained in the suspension, the content of the crosslinkable hydrocarbon monomer such as divinylbenzene is 70% by mass or more. Accordingly, the shell having such a resin composition can be formed, that the relative permittivity and dielectric dissipation factor are lower than hollow particles in which the main component of the shell is an acrylic resin.

In conventional production methods, even in the case of forming the shell by use of a crosslinkable hydrocarbon monomer, when a resin molded body is produced by adding hollow particles to a resin composition containing an organic solvent, the permittivity and dielectric dissipation factor of the resin molded body cannot be sufficiently decreased. It is estimated that in conventional production methods, the crosslinking density of the shell cannot be sufficiently high since polymerization reaction cannot be sufficiently promoted even when the percentage of the crosslinkable monomer in the polymerizable monomer is increased. Accordingly, the hollow particles obtained by conventional production methods are estimated as follows: their solvent resistance is poor; the organic solvent easily penetrates the shell; when the resin molded body is produced by adding the hollow particles to the resin composition containing the organic solvent, the organic solvent penetrates the hollow particles, and even in the resin molded body, the organic solvent remains in the interior of the hollow particles to decrease the percentage of the gas in the interior of the hollow portion; and the permittivity and dielectric dissipation factor of the resin molded body cannot be sufficiently decreased, accordingly.

In the production method of the present disclosure, the shell is formed by the polymerization of the polymerizable monomer containing a large amount of the crosslinkable hydrocarbon monomer, and the above-specified reaction promoting liquid is added during the polymerization reaction for forming the shell. Accordingly, the polymerization reaction is promoted and sufficiently progresses. As a result, it is estimated that since the shell thus formed has a resin composition such that the dielectric property is excellent and the crosslinking density of the shell is high, the hollow particles excellent in dielectric property and solvent resistance can be obtained. In the production method of the present disclosure, it is estimated that the above-specified reaction promoting liquid added during the polymerization reaction, enters the interior of the shell and swells the shell to promote the thermal motion of the shell, thereby promoting the polymerization reaction.

The method for producing the hollow particles of the present disclosure includes the steps of preparing the mixture liquid, preparing the suspension, and subjecting the suspension to the polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles of the present disclosure may be a production method including the following steps.

### (1) Mixture liquid preparation step

The mixture liquid preparation step includes preparing the mixture liquid containing the polymerizable monomer, the hydrophobic solvent, the polymerization initiator, the dispersion stabilizer and the aqueous medium.

### (2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

### (3) Polymerization step

The polymerization step includes subjecting the suspension to a polymerization reaction to prepare the precursor composition containing the precursor particles which have the hollow portion surrounded by the shell containing the resin and which include the hydrophobic solvent in the hollow portion.

### (4) Solid-liquid separation step

The solid-liquid separation step includes performing solid-liquid separation of the precursor composition to obtain the precursor particles including the hydrophobic solvent in the hollow portion.

### (5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition containing the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer in the droplets 8 of the monomer composition, and the shell 6 contains the polymer of the polymerizable monomer as the resin.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinbelow, the five steps described above and other steps are described in order.

### (1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer, (E) the aqueous medium and (F) other materials.

### (A) Polymerizable monomer

The polymerizable monomer in the mixture liquid contains at least the crosslinkable hydrocarbon monomer. It may further contain a non-crosslinkable hydrocarbon monomer and a polymerizable monomer different from hydrocarbon monomers to the extent that does not impair the effects of the present disclosure.

### [Crosslinkable hydrocarbon monomer]

As the crosslinkable hydrocarbon monomer, examples include, but are not limited to, an aromatic divinyl monomer such as divinylbenzene, divinylbiphenyl and divinylnaphthalene, and a diene monomer such as a linear or branched diolefin (e.g., butadiene, isoprene, 2,3-dimethylbutadiene, pentadiene and hexadiene) and an alicyclic diolefin (e.g., dicyclopentadiene, cyclopentadiene and ethylidene tetracyclododecene). Also, a crosslinkable macromer such as polybutadiene, polyisoprene, SBS (a block copolymer of butadiene and styrene) and SIS (a block copolymer of styrene and isoprene) may be used, for example. These crosslinkable hydrocarbon monomers may be used alone or in combination of two or more. Of them, an aromatic divinyl monomer is preferred, and divinylbenzene is more preferred, from the point of view that the polymerization reaction is easily stabilized, and hollow particles excellent in dielectric property, solvent resistance, strength, heat resistance and so on are obtained.

In the production method of the present disclosure, in 100% by mass of the polymerizable monomer contained in the mixture liquid, the content of the crosslinkable hydrocarbon monomer is 70% by mass or more. Accordingly, the shell that is high in crosslinking density and excellent in solvent resistance can be formed, and the hollow particles that are excellent in dielectric property can be obtained. The hollow particles having the shell that is high in crosslinking density, are advantageous in that they are excellent in strength, less likely to collapse, and resistant to deformation caused by heat or the like applied from the outside. Also, when the content of the crosslinkable hydrocarbon monomer is 70% by mass or more, phase separation between the hydrophobic solvent and the components forming the shell is likely to occur in the droplets of the monomer composition; therefore, the hollow portion is easily formed.

The content of the crosslinkable hydrocarbon monomer is preferably 80% by mass or more, more preferably 90% by mass or more, and still more preferably 95% by mass or more. The upper limit of the content of the crosslinkable hydrocarbon monomer is not particularly limited. For example, the upper limit may be 98% by mass or less, or it may be 96% by mass or less.

### [Non-crosslinkable hydrocarbon monomer]

As the non-crosslinkable hydrocarbon monomer, examples include, but are not limited to, an aromatic monovinyl monomer such as styrene, vinyl toluene, α-methylstyrene, p-methylstyrene, ethylvinylbenzene, ethylvinylbiphenyl and ethylvinylnaphthalene; a linear or branched monoolefin such as ethylene, propylene and butylene; and an alicyclic monoolefin such as vinylcyclohexane, norbornene, tricyclododecene and 1,4-methano-1,4,4a,9a-tetrahydrofluorene. Also, a non-crosslinkable macromer may be used. These non-crosslinkable hydrocarbon monomers may be used alone or in combination of two or more. Of them, an aromatic monovinyl monomer is preferred, and ethylvinylbenzene is particularly preferred, from the viewpoint of improving the dielectric property of the hollow particles.

In 100% by mass of the polymerizable monomer contained in the mixture liquid, the content of the non-crosslinkable hydrocarbon monomer is not particularly limited. From the viewpoint of suppressing a decrease in the solvent resistance of the non-crosslinkable hydrocarbon monomer, the upper limit is preferably 30% by mass or less, more preferably 20% by mass or less, still more preferably 10% by mass or less, and even more preferably 5% by mass or less. The lower limit is not particularly limited. For example, the lower limit may be 2% by mass or more, or it may be 4% by mass or more.

From the viewpoint of improving the dielectric property of the hollow particles, in 100% by mass of the polymerizable monomer contained in the mixture liquid, the content of the hydrocarbon monomer, which is the sum of the crosslinkable hydrocarbon monomer and the non-crosslinkable hydrocarbon monomer, is preferably 90% by mass or more, more preferably 95% by mass or more, still more preferably 98% by mass or more, and even more preferably 100% by mass. As the percentage of the polymerizable monomer different from hydrocarbon monomers, such as an acrylic monomer, increases, the relative permittivity and dielectric dissipation factor of the obtained hollow particles tend to increase. From the viewpoint of dielectric property, accordingly, the content of the hydrocarbon monomer is preferably large.

### [Polymerizable monomer different from hydrocarbon monomers]

The polymerizable monomer in the mixture liquid may further contain the polymerizable monomer different from hydrocarbon monomers, to the extent that does not impair the effects of the present disclosure. The polymerizable monomer different from hydrocarbon monomers may be a crosslinkable monomer or a non-crosslinkable monomer.

As the crosslinkable monomer different from hydrocarbon monomers, examples include, but are not limited to, a crosslinkable allyl monomer such as diallyl phthalate, and a crosslinkable acrylic monomer such as ethylene glycol di(meth)acrylate, diethylene glycol di(meth)acrylate, pentaerythritol di(meth)acrylate, pentaerythritol tetra(meth)acrylate, tricyclodecane dimethanol di(meth)acrylate, 3-(meth)acryloyloxy-2-hydroxypropyl (meth)acrylate, trimethylolpropane tri(meth)acrylate, ditrimethylolpropane tetra(meth)acrylate, ethoxylated trimethylolpropane tri(meth)acrylate, ethoxylated pentaerythritol tetra(meth)acrylate, pentaerythritol tri(meth)acrylate, pentaerythritol tetra(meth)acrylate, dipentaerythritol hexa(meth)acrylate, dipentaerythritol poly(meth)acrylate, allyl (meth)acrylate and vinyl (meth)acrylate. Also, a crosslinkable macromer such as bothvinyl-terminated polyphenylene ether and both-methacrylicterminated polyphenylene ether may be used, for example.

As the non-crosslinkable monomer different from hydrocarbon monomers, examples include, but are not limited to, a non-crosslinkable acrylic monomer such as methyl (meth)acrylate, ethyl (meth)acrylate, butyl (meth)acrylate, 2-ethylhexyl (meth)acrylate, lauryl (meth)acrylate, t-butylaminoethyl (meth)acrylate, glycidyl (meth)acrylate, 2-hydroxyethyl (meth)acrylate and (meth)acrylic acid; an acrylamide monomer such as (meth)acrylamide, N-methylol (meth)acrylamide and N-butoxymethyl (meth)acrylamide, and derivatives thereof; a carboxylic acid vinyl ester monomer such as vinyl acetate; a vinyl halide monomer such as vinyl chloride; a vinylidene halide monomer such as vinylidene chloride; and a vinylpyridine monomer. Also, a non-crosslinkable macromer such as (meth)acrylic-terminated polystyrene and (meth)acrylicterminated polymethyl methacrylate may be used, for example.

From the viewpoint of increasing the solvent resistance of the hollow particles, in 100% by mass of the polymerizable monomer contained in the mixture liquid, the content of the crosslinkable monomer, which is the sum of the crosslinkable hydrocarbon monomer and the crosslinkable monomer different from hydrocarbon monomers, is preferably 70% by mass or more, more preferably 80% by mass or more, still more preferably 90% by mass or more, and even more preferably 95% by mass or more. As the content of the crosslinkable monomer increases, the crosslinking density of the shell easily increases. Accordingly, the solvent resistance of the hollow particles can be increased. The upper limit of the content of the crosslinkable monomer is not particularly limited. For example, the upper limit may be 98% by mass or less, or it may be 96% by mass or less.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is preferably from 15% by mass to 50% by mass, and more preferably from 20% by mass to 40% by mass.

From the viewpoint of increasing the mechanical strength of the hollow particles, the content of the polymerizable monomer is preferably 90% by mass or more, and more preferably 95% by mass or more, with respect to the total mass (100% by mass) of a solid component obtained by excluding the hydrophobic solvent from the material for the oil phase in the mixture liquid.

In the present disclosure, the solid component includes all components excluding solvent, and a liquid polymerizable monomer and the like are included in the solid component.

### (B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the hollow particles including the hydrophobic solvent, is obtained. That is, since the hydrophobic solvent collects in the interior of the particles, the hollow portion filled with the hydrophobic solvent is formed in the interior of the obtained precursor particles.

As the hydrophobic solvent, such an organic solvent is preferably selected, that the solubility in water at 20°C is smaller than the crosslinkable hydrocarbon monomer contained in the mixture liquid. When the crosslinkable hydrocarbon monomer or the hydrophobic solvent is a combination of two or more kinds of crosslinkable hydrocarbon monomers or hydrophobic solvents, it is preferable to select the hydrophobic solvents according to the type of the crosslinkable hydrocarbon monomers so that the solubility of the hydrophobic solvent having the largest solubility is smaller than the crosslinkable hydrocarbon monomer having the smallest solubility.

The organic solvent such that the solubility in water at 20°C is smaller than the crosslinkable hydrocarbon monomer, can be selected from known organic solvents, and it is not particularly limited. For example, a hydrocarbon solvent is preferably used. The use of a hydrocarbon solvent is preferred from the point of view that its solubility in water at 20°C is smaller than divinylbenzene, which is a crosslinkable hydrocarbon monomer preferably used in the present disclosure.

As the hydrocarbon solvent, examples include, but are not limited to, a chain hydrocarbon solvent such as pentane, hexane, heptane, octane, 2-methylbutane and 2-methylpentane, a cyclic hydrocarbon solvent such as cyclohexane, methylcyclohexane and cycloheptane, and an aromatic hydrocarbon solvent such as benzene, toluene and xylene.

The hydrocarbon solvent is preferably a chain hydrocarbon solvent, more preferably a chain hydrocarbon solvent containing 5 to 8 carbon atoms, and still more preferably at least one kind selected from the group consisting of pentane, hexane, heptane and octane, from the following viewpoints; the hollow portion is easily formed; the hollow particles excellent in hollow dielectric property and solvent resistance are easily obtained; and the amount of the hydrophobic solvent remaining in the hollow particles can be easily decreased due to the ease of removal.

These hydrophobic solvents may be used alone or in combination of two or more.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.0 or less. The relative permittivity is one of the indices of the level of the polarity of a compound. In the case where the relative permittivity of the hydrophobic solvent is 2.0 or less and sufficiently small, it is considered that phase separation progresses rapidly in the droplets of the polymerizable monomer and a hollow is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the crosslinkable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. With respect to 100 parts by mass of the polymerizable monomer, the content of the hydrophobic solvent in the mixture liquid is more preferably 60 parts by mass or more and 400 parts by mass or less, and still more preferably 70 parts by mass or more and 300 parts by mass or less.

### (C) Polymerization initiator

In the production method of the present disclosure, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). In the production method of the present disclosure, an organic peroxide is preferably used as the polymerization initiator. Since an organic peroxide can easily promote a polymerization reaction, it can improve the solvent resistance of the hollow particles. In addition, since a decomposition product of the organic peroxide is less likely to remain after a polymerization reaction, a deterioration in the dielectric property of the hollow particles can be suppressed. The decomposition product of the polymerization initiator remaining in the shell increases the molecular motion of the shell. Accordingly, when the amount of the residual decomposition product is large, the dielectric dissipation factor of the hollow particles may increase. Since the decomposition product of the organic peroxide can be easily removed and is less likely to remain, an increase in the molecular motion of the shell can be suppressed by use of the organic peroxide and, as a result, an increase in the dielectric dissipation factor can be suppressed.

With respect to 100 parts by mass of the polymerizable monomer in the mixture liquid, the content of the oil-soluble polymerization initiator is preferably from 0.1 parts by mass to 10 parts by mass, more preferably from 0.5 parts by mass to 7 parts by mass, and still more preferably from 1 part by mass to 5 parts by mass. When the content of the oil-soluble polymerization initiator is equal to or more than the lower limit value, a polymerization reaction can progress sufficiently. When the content of the oil-soluble polymerization initiator is equal to or less than the upper limit value, the oil-soluble polymerization initiator is less likely to remain after the end of the polymerization reaction, and an unexpected side reaction is less likely to progress.

### (D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer, and a surfactant. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

Of these inorganic dispersion stabilizers, a sparingly water-soluble inorganic dispersion stabilizer is preferred; a sparingly water-soluble metal salt such as the above-mentioned sulfate, carbonate, phosphate and metal hydroxide is more preferred; a metal hydroxide is still more preferred; and magnesium hydroxide is particularly preferred.

In the present disclosure, the sparingly water-soluble inorganic dispersion stabilizer is preferably an inorganic compound such that the solubility in 100 g of water is 0.5 g or less. Also in the present disclosure, the sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. By using the sparingly water-soluble inorganic dispersion stabilizer in the form of the colloidal dispersion containing the sparingly water-soluble inorganic dispersion stabilizer colloidal particles, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble polyvalent metal salts may be used alone or in combination of two or more.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts. In this method, from the point of view that the particle diameter of the sparingly water-soluble metal hydroxide colloidal particles can be suitably controlled, it is preferable to mix the aqueous solutions by, while stirring the aqueous solution of the water-soluble polyvalent metal salt, gradually adding the aqueous solution of the at least one selected from alkali metal hydroxide salts and alkaline earth metal hydroxide salts to the aqueous solution of the water-soluble polyvalent metal salt.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (e.g., polyacrylic acid), a cellulose (e.g., hydroxyethyl cellulose, carboxymethyl cellulose, methyl cellulose, ethyl cellulose), polyvinylpyrrolidone, polyacrylimide, polyethylene oxide and a poly(hydroxystearic acid-g-methyl methacrylate-co-methacrylic acid) copolymer.

As an inorganic water-soluble high-molecular-weight compound, examples include, but are not limited to, sodium tripolyphosphate.

The surfactant is a compound containing both a hydrophilic group and a hydrophobic group per molecule. As the surfactant, examples include, but are not limited to, a known ionic surfactant such as an anionic surfactant, a cationic surfactant and an ampholytic surfactant, and a known nonionic surfactant.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

### (E) Aqueous medium

In the present disclosure, the term "aqueous medium" means a medium selected from the group consisting of water, a hydrophilic solvent and a mixture thereof. In the production method of the present disclosure, water is preferably used as the aqueous medium, from the viewpoint of obtaining a polymerization reaction promoting effect by the reaction promoting liquid.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO). To obtain a sufficient polymerization reaction promoting effect by the reaction promoting liquid in the polymerization step described later, the hydrophilic solvent contained in the aqueous medium is preferably different from the reaction promoting liquid.

### (F) Other materials

The mixture liquid may further contain other materials that are different from the above-mentioned materials (A) to (E), to the extent that does not impair the effects of the present disclosure.

As another material, the mixture liquid may contain a polar component. When the mixture liquid contains the polar component, the shell thickness of the obtained hollow particles can be appropriately controlled.

As the polar component, for example, an organic acid or a metal salt thereof is preferably used.

As the organic acid, examples include a rosin acid and a higher fatty acid. As the higher fatty acid, examples include a higher fatty acid containing 10 to 25 carbon atoms from which the carbon atom of a carboxyl group is excluded.

As the metal used in the metal salt of the organic acid, examples include, but are not limited to, an alkali metal such as Li, Na and K, and an alkaline-earth metal such as Mg and Ca. Of them, an alkali metal is preferred, and at least one selected from Li, Na and K is more preferred.

When the organic acid or metal salt thereof is used as the polar component, with respect to the total (100 parts by mass) of the polymerizable monomer and the hydrophobic solvent, the total content of the organic acid or metal salt thereof is preferably 0.001 parts by mass or more, and more preferably 0.0015 parts by mass or more; meanwhile, it is preferably 0.1 parts by mass or less, and more preferably 0.05 parts by mass or less. When the content is equal to or more than the lower limit value, the particle diameter and shell thickness of the hollow particles can be easily controlled. Especially, the volume average particle diameter of the hollow particles can easily fall within a preferred range described later. On the other hand, when the content is equal to or less than the upper limit value, a decrease in the content of the polymerizable monomer can be suppressed. Accordingly, a decrease in the strength and solvent resistance of the shell can be suppressed.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

### (2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal multilevel in-line disperser such as MILDER (product name, manufactured by Pacific Machinery & Engineering Co., Ltd.) and CAVITRON (product name, manufactured by EUROTEC, Ltd.); a vertical multilevel in-line disperser such as an in-line disperser manufactured by IKA (e.g., DISPAX-REACTOR (registered trademark) DRS (product name)); and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 1 um to 10 µm, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In such a suspension polymerization method using the oil-soluble polymerization initiator, there is no opportunity for the polymerization initiator to come into contact with the polymerizable monomer dispersed in the aqueous medium. Thus, the subgeneration of surplus resin particles (e.g., solid particles having a relatively small particle diameter) in addition to the target resin particles having the hollow portion, can be suppressed by using the oil-soluble polymerization initiator.

### (3) Polymerization step

The polymerization step includes preparing a precursor composition containing precursor particles which have a hollow portion surrounded by a shell containing a resin and which include the hydrophobic solvent in the hollow portion, by subjecting the suspension obtained by the above-described suspension step to a polymerization reaction.

In the production method of the present disclosure, the reaction promoting liquid is added during the polymerization reaction, and the polymerization reaction is then further continued. As the reaction promoting liquid, the low-molecular compound in which the solubility in water at 20°C is larger than that of the hydrophobic solvent and is from 0.5 g/L to 1000 g/L, is used.

When the hydrophobic solvent is a combination of two or more kinds of hydrophobic solvents, the reaction promoting liquid is preferably selected so that the solubility of the reaction promoting liquid is larger than that of the hydrophobic solvent having the largest solubility.

The low-molecular compound used as the reaction promoting liquid is liquid at 0°C to 30°C. The upper limit of the molecular weight thereof is preferably 200 or less, and more preferably 100 or less. The lower limit is not particularly limited, and it is generally 50 or more.

The low-molecular compound may be an unreactive low-molecular compound or a reactive low-molecular compound. Preferred is an unreactive low-molecular compound, from the point of view that there is no adverse effect on the dielectric property of the hollow particles even if the amount of the added low-molecular compound is increased. As used herein, "reactive" means that it reacts with the polymerizable monomer in the mixture liquid, and "unreactive" means that it does not react with the polymerizable monomer in the mixture liquid. That is, "reactive" means that it chemically reacts with the polymerizable monomer in the mixture liquid to form a covalent bond.

The solubility in water at 20°C of the unreactive low-molecular compound used as the reaction promoting liquid, is only required to be larger than that of the hydrophobic solvent and may be from 0.5 g/L to 1000 g/L. From the viewpoint of increasing the solvent resistance of the hollow particles, it is preferably 10 g/L or more, more preferably 30 g/L or more, still more preferably 40 g/L or more, and even more preferably 50 g/L or more. On the other hand, it is preferably 700 g/L or less, more preferably 500 g/L or less, and still more preferably 300 g/L or less.

As the unreactive low-molecular compound used as the reaction promoting liquid, an organic solvent is preferably used since it easily enters the interior of the shell and promotes a crosslinking reaction.

The organic solvent is appropriately selected from known organic solvents that satisfy the above-described solubility, and it is not particularly limited. As the organic solvent preferably used as the reaction promoting liquid, examples include, but are not limited to, a ketone solvent such as methyl ethyl ketone, acetone and 3-pentanone; an ester solvent such as methyl acetate and ethyl acetate; an ether solvent such as dimethyl ether and diethyl ether; and an alcohol solvent such as propanol, isopropanol and butanol. These organic solvents can be used alone or in combination of two or more.

From the viewpoint of increasing the solvent resistance of the hollow particles, the organic solvent is preferably at least one selected from the ketone solvent and the ester solvent, and more preferably at least one selected from the group consisting of methyl ethyl ketone, 3-pentanone, methyl acetate and ethyl acetate.

The solubility in water at 20°C of the reactive low-molecular compound used as the reaction promoting liquid, is only required to be larger than that of the hydrophobic solvent in the mixture liquid and may be from 0.5 g/L to 1000 g/L. From the viewpoint of suppressing a deterioration in the dielectric property of the hollow particles, it is preferably 100 g/L or less, more preferably 80 g/L or less, still more preferably 70 g/L or less, even more preferably 30 g/L or less, and particularly preferably 20 g/L or less. The lower limit of the solubility of the low-molecular compound is not particularly limited. From the viewpoint of increasing the solvent resistance of the hollow particles, it is preferably 1.0 g/L or more, and more preferably 2.0 g/L or more.

As the reactive low-molecular compound used as the reaction promoting liquid, a heteroatom-containing polymerizable monomer is preferably used since it easily enters the interior of the shell and promotes a crosslinking reaction. The polymerizable monomer used as the reaction promoting liquid may be a crosslinkable monomer or a non-crosslinkable monomer. Preferred is a crosslinkable monomer from the point of view that a decrease in the solvent resistance of the hollow particles can be suppressed by suppressing a decrease in the crosslinking density of the shell.

As the heteroatom-containing polymerizable monomer, for example, a (meth)acrylic monomer that contains a (meth)acryloyl group as a polymerizable functional group, or a polar group-containing monomer is preferably used.

As the (meth)acrylic monomer, examples include, but are not limited to, an (meth)acrylic acid alkyl ester containing an alkyl group having 1 to 5 carbon atoms, such as methyl (meth)acrylate, ethyl (meth)acrylate and butyl (meth)acrylate; a (meth)acrylamide such as (meth)acrylamide, N-methylol (meth)acrylamide and N-butoxymethyl (meth)acrylamide, and derivatives thereof; (meth)acrylic acid nitrile; ethylene glycol di(meth)acrylate; diethylene glycol di(meth)acrylate; allyl (meth)acrylate; and vinyl (meth)acrylate.

For example, the polar group-containing monomer is preferably a polymerizable monomer containing a polar group selected from a carboxyl group, a hydroxyl group, a sulfonic acid group, an amino group, a polyoxyethylene group and an epoxy group. As such a polymerizable monomer, examples include, but are not limited to, a carboxyl group-containing monomer such as an ethylenically unsaturated carboxylic acid monomer such as (meth)acrylic acid, crotonic acid, cinnamic acid, itaconic acid, fumaric acid, maleic acid and butene tricarboxylic acid; a hydroxyl group-containing monomer such as 2-hydroxyethyl (meth)acrylate, 2-hydroxypropyl (meth)acrylate, 4-hydroxybutyl (meth)acrylate and 2-hydroxy-3-(meth)acryloyloxy propyl (meth)acrylate; a sulfonic acid group-containing monomer such as styrenesulfonic acid; an amino group-containing monomer such as dimethylaminoethyl (meth)acrylate, diethylaminoethyl (meth)acrylate and t-butylaminoethyl (meth)acrylate; a polyoxyethylene group-containing monomer such as methoxypolyethylene glycol (meth)acrylate; and an epoxy group-containing monomer such as glycidyl (meth)acrylate, allyl glycidyl ether and 4-hydroxybutyl acrylate glycidyl ether.

These heteroatom-containing polymerizable monomers may be used alone or in combination of two or more. From the point of view that the crosslinking reaction of the shell is easily promoted and a decrease in the solvent resistance of the hollow particles is suppressed by suppressing a decrease in the crosslinking density of the shell by the introduction of the polymerizable monomer, preferred is at least one selected from a (meth)acrylic monomer containing two or more polymerizable functional groups and a polar group-containing monomer containing two or more polymerizable functional groups; more preferred is a (meth)acrylic monomer containing two or more polymerizable functional groups; and particularly preferred is allyl (meth)acrylate. Of polymerizable monomers containing a heteroatom and only one polymerizable functional group, a (meth)acrylic acid alkyl ester containing an alkyl group containing 1 to 5 carbon atoms, and a (meth)acrylic monomer containing the above-described polar group are preferred, and a (meth)acrylic acid alkyl ester containing an alkyl group containing 1 to 3 carbon atoms, and a (meth)acrylic monomer containing a hydroxyl group or an amino group are more preferred. As the (meth)acrylic acid alkyl ester containing an alkyl group containing 1 to 3 carbon atoms, methyl (meth)acrylate is particularly preferred. As the (meth)acrylic monomer containing a hydroxyl group or an amino group, t-butylaminoethyl (meth)acrylate is particularly preferred.

As the reaction promoting liquid, a mixture of the unreactive low-molecular compound and the reactive low-molecular compound may be used, or any one of the unreactive low-molecular compound and the reactive low-molecular compound may be used. As the reaction promoting liquid, for example, at least one selected from the group consisting of the ketone solvent, the ester solvent, the (meth)acrylic monomer containing two or more polymerizable functional groups, the (meth)acrylic acid alkyl ester containing an alkyl group containing 1 to 3 carbon atoms, and the (meth)acrylic monomer containing a hydroxyl group or an amino group is preferably used, and at least one selected from the group consisting of methyl ethyl ketone, 3-pentanone, methyl acetate, ethyl acetate, allyl (meth)acrylate, methyl (meth)acrylate and t-butylaminoethyl (meth)acrylate is more preferably used.

when the unreactive low-molecular compound is added as the reaction promoting liquid, with respect to the total mass (100 parts by mass) of the polymerizable monomer and hydrophobic solvent contained in the mixture liquid, the lower limit of the amount of the added unreactive low-molecular compound is preferably 1 part by mass or more, and more preferably 2 parts by mass or more. On the other hand, the upper limit is preferably 20 parts by mass or less, and more preferably 10 parts by mass or less.

When the amount of the unreactive low-molecular compound added as the reaction promoting liquid is equal to or more than the lower limit value, the effect of promoting the crosslinking reaction of the shell is improved, and the solvent resistance of the hollow particles is increased. On the other hand, when the amount of the unreactive low-molecular compound added as the reaction promoting liquid is equal to or less than the upper limit value, the deformation of the hollow particles, which is due to the swelling of the shell, can be suppressed.

When the reactive low-molecular compound is added as the reaction promoting liquid, with respect to the total mass (100 parts by mass) of the polymerizable monomer and hydrophobic solvent contained in the mixture liquid, the lower limit of the amount of the added reactive low-molecular compound is preferably 1 part by mass or more, and more preferably 2 parts by mass or more. On the other hand, the upper limit is preferably 3 parts by mass or less.

When the amount of the reactive low-molecular compound added as the reaction promoting liquid is equal to or more than the lower limit value, the effect of promoting the crosslinking reaction of the shell is improved, and the solvent resistance of the hollow particles can be increased. On the other hand, when the amount of the reactive low-molecular compound added as the reaction promoting liquid is equal to or less than the upper limit value, a deterioration in the dielectric property of the hollow particles can be suppressed. In general, the reactive low-molecular compound contains a heteroatom and reacts with the polymerizable monomer in the shell to be a component of the shell. Accordingly, by setting the amount of the added reactive low-molecular compound to the upper limit value or less, an increase in the heteroatom amount in the shell is suppressed, and a deterioration in the dielectric property can be suppressed, accordingly. In the case where the reactive low-molecular compound is a non-crosslinkable monomer, the amount of the added reactive low-molecular compound is preferably set to equal to or less than the upper limit value, from the viewpoint of suppressing a decrease in the crosslinking density of the shell and suppressing a deterioration in the solvent resistance.

In the polymerization step, it is preferable to add the reaction promoting liquid when the polymerization conversion rate of the polymerizable monomer contained in the mixture liquid is preferably from 40% to 90%, and more preferably from 45% to 85%, from the point of view that the crosslinking reaction of the shell is promoted to improve the solvent resistance of the hollow particles.

In the present disclosure, the polymerization conversion rate is obtained by the following formula (B) using the mass of the solid component of the particles produced at the time of adding the reaction promoting liquid and the mass of the polymerizable monomer remaining unreacted at the time of adding the reaction promoting liquid. The mass of the unreacted polymerizable monomer can be measured by gas chromatography (GC) . Polymerization conversion rate (% by mass) = 100-{[Mass of the unreacted polymerizable monomer]/([Mass of the solid component of the particles produced at the time of adding the reaction promoting liquid]+[Mass of the unreacted polymerizable monomer])}×100

When the unreactive low-molecular compound is added as the reaction promoting liquid, the precursor particles are formed by polymerization of the polymerizable monomer contained in the droplets of the monomer composition, and the shell of the precursor particles contains the polymer of the polymerizable monomer as the resin. When the reactive low-molecular compound is added as the reaction promoting liquid, the precursor particles are formed by polymerization of the polymerizable monomer and the reactive low-molecular compound contained in the droplets of the monomer composition, and the shell of the precursor particles contains the polymer of the polymerizable monomer and the reactive low-molecular compound as the resin.

In the present disclosure, from the viewpoint of improving the dielectric property of the hollow particles, in the total amount (100% by mass) of the polymerizable monomer and reactive low-molecular compound forming the shell, the content of the hydrocarbon monomer is preferably 90% by mass or more, more preferably 91% by mass or more, and still more preferably 94% by mass or more.

In the polymerization step, the polymerization system is not particularly limited. For example, a batch system, a semicontinuous system or a continuous system may be employed.

The polymerization temperature is preferably from 40°C to 90°C, and more preferably from 50°C to 80°C.

The temperature increase rate up to the polymerization temperature, is preferably from 10°C/h to 60°C/h, and more preferably from 15°C/h to 55°C/h.

The polymerization reaction time is preferably from 1 hour to 48 hours, and more preferably from 4 hours to 36 hours.

The timing to add the reaction promoting liquid is preferably controlled so that the polymerization conversion rate of the polymerizable monomer contained in the mixture liquid falls within the preferred range described above. For example, the reaction promoting liquid is preferably added after a lapse of 20 minutes to 2 hours after reaching the polymerization temperature, and more preferably after a lapse of 30 minutes to 1.5 hours after reaching the polymerization temperature; moreover, the polymerization reaction is preferably carried out for 1 hour to 30 hours, and more preferably about 2 hours to 25 hours.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

### (4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

### (5) Solvent removal step

The solvent removal step includes removing the hydrophobic solvent from the precursor particles obtained by the solid-liquid separation step.

For example, by removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, the hydrophobic solvent may be removed in the slurry containing the precursor particles and the aqueous medium.

In this method, for example, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry in which an inert gas is included in the precursor particles, is obtained. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the aqueous medium from the precursor particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium to the precursor composition at a predetermined pressure (a high, normal or reduced pressure).

### (6) Others

In addition to the steps (1) to (5) mentioned above, the following washing step (6-a) and the following particle interior substitution step (6-b) may be added, for example.

### (6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

### (6-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

### 2. Hollow particles

The hollow particles of the present disclosure are hollow particles which comprise a shell containing a resin and a hollow portion surrounded by the shell and which have a void ratio of 50% or more,
wherein the shell contains, as the resin, a polymer in which 70% by mass or more of a crosslinkable hydrocarbon monomer unit is contained, and
wherein, in a hollow particle immersion test in which a mixture obtained by adding 0.1 mg of the hollow particles to 4 mL of toluene and shaking them for 10 minutes at a shaking rate of 100 rpm, is left to stand for 48 hours in an environment at 25°C, less than 5% by mass of the hollow particles submerge in the toluene.

In the immersion test, as the hollow particles that submerge in the toluene decrease, the solvent resistance of the hollow particles is considered to be better.

The hollow particles of the present disclosure are excellent in solvent resistance, since less than 5% by mass of the hollow particles submerge in the toluene in the hollow particle immersion test. The hollow particles that submerge in the toluene in the hollow particle immersion test is only required to be less than 5% by mass, and they are preferably less than 3% by mass, and more preferably less than 1% by mass.

The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of dielectric property and solvent resistance, the hollow particles of the present disclosure preferably has a solid shell.

The hollow portion of the hollow particles can be determined by, for example, SEM observation of a cross section of the particles or TEM observation of the particles as they are.

From the viewpoint of exerting excellent dielectric property, the hollow portion of the hollow particles of the present disclosure is preferably filled with gas such as air.

Hollow particles obtained by use of a hydrocarbon-based resin such as a styrenic resin, are expected to function as an additive for decreasing the permittivity and dielectric dissipation factor of various kinds of materials, since the relative permittivity and dielectric dissipation factor of the shell-forming resin itself are low. However, there is the following problem: the permittivity and dielectric dissipation factor decreasing effect is insufficient when the resin molded body is produced by adding conventional hollow particles obtained by use of hydrocarbon-based resin to the resin composition containing the organic solvent. The reason is thought as follows: the organic solvent of the resin composition penetrates the interior of the hollow particles and even in the resin molded body, the organic solvent remains in the interior of the hollow particles to decrease the percentage of the gas in the interior of the hollow portion.

Meanwhile, the shell of the hollow particles of the present disclosure has a resin composition such that the relative permittivity and the dielectric dissipation factor are low, and the shell is excellent in solvent resistance. Accordingly, even when the resin molded body is produced by adding the hollow particles to the resin composition containing the organic solvent, the permittivity and dielectric dissipation factor of the resin molded body can be sufficiently decreased. The shell of the hollow particles of the present disclosure contains a polymer in which 70% by mass or more of a constitutional unit derived from a crosslinkable hydrocarbon monomer such as divinylbenzene is contained, and the percentage of the hydrocarbon in the shell is large. Accordingly, compared hollow particles in which the main component of the shell is acrylic resin or the like, the hollow particles of the present disclosure have such a resin composition, that the relative permittivity and the dielectric dissipation factor are low. Since the shell of the hollow particles of the present disclosure contains a large amount of the crosslinkable monomer units, a covalent bond network is tightly strung in the shell. In addition, since less than 5% by mass of the hollow particles submerge in the toluene in the hollow particle immersion test, it is estimated that the shell has a high crosslinking density structure which is resistant to toluene penetration, and the shell has excellent solvent resistance, accordingly. As just described, the hollow particles of the present disclosure are excellent in dielectric property and solvent resistance. Accordingly, when the resin molded body is produced by adding the hollow particles of the present disclosure to the resin composition containing the organic solvent, an excellent effect of decreasing the permittivity and dielectric dissipation factor of the resin molded body is obtained. This is due to the following reasons: the hollow particles' own dielectric property is excellent; the organic solvent of the resin composition is difficult to penetrate the hollow particles; and even in the resin molded body, the percentage of the gas in the interior of the hollow particles is maintained.

In SEM observation of the hollow particles of the present disclosure, the number of the hollow particles having a communication hole or shell defect is preferably 5 or less per 100 of the hollow particles.

In general, there are hollow particles in which the shell does not have a communication hole communicating between the hollow portion and the external space of the particles, and hollow particles in which the shell has one or two or more communication holes and the hollow portion communicates with the outside of the particles via the communication holes. In general, depending on the size of the hollow particles, the diameter of the communication hole is approximately from 10 nm to 500 nm. While the communication hole imparts beneficial functions to the hollow particles, since the communication hole is a defect portion of the shell, it decreases the strength of the hollow particles and easily causes the collapse of the hollow particles.

Also, the hollow particles may have a crack-shaped shell defect which is extremely large relative to the size of the hollow particles. In general, depending on the size of the hollow particles, a crack having a length of 1 um or more extremely deteriorates the strength of hollow particles. Accordingly, it is recognized as a shell defect.

In the hollow particle immersion test, when less than 5% by mass of the hollow particles submerge in the toluene, the number of the hollow particles having a communication hole or shell defect can be considered to be 5 or less per 100 of the hollow particles.

In the hollow particles of the present disclosure, the content of the crosslinkable hydrocarbon monomer unit in the polymer contained in the shell is only required to be 70% by mass or more. From the viewpoint of improving the dielectric property and solvent resistance of the hollow particles, the content is preferably 80% by mass or more, more preferably 90% by mass or more, and still more preferably 95% by mass or more. The upper limit of the content of the crosslinkable hydrocarbon monomer unit is not particularly limited. For example, it may be 98% by mass or less, or it may be 96% by mass or less.

Also in the hollow particles of the present disclosure, the content of the hydrocarbon monomer unit in the polymer contained in the shell, is preferably 90% by mass or more, more preferably 91% by mass or more, and still more preferably 94% by mass or more, from the viewpoint of improving the dielectric property of the hollow particles. The upper limit of the content of the hydrocarbon monomer unit is not particularly limited. For example, it may be 98% by mass or less, or it may be 96% by mass or less.

Also in the hollow particles of the present disclosure, the content of the crosslinkable monomer unit in the polymer contained in the shell is preferably 70% by mass or more, more preferably 80% by mass or more, still more preferably 90% by mass or more, and even more preferably 95% by mass or more, from the viewpoint of improving the solvent resistance of the hollow particles. The upper limit of the content of the crosslinkable monomer unit is not particularly limited. For example, it may be 98% by mass or less, or it may be 96% by mass or less.

The relative permittivity of the hollow particles of the present disclosure at a frequency of 1 GHz is preferably 1.50 or less, more preferably 1.45 or less, and still more preferably 1.40 or less. The lower limit of the relative permittivity of the hollow particles of the present disclosure at a frequency of 1 GHz, is not particularly limited, and it is generally 1.00 or more.

Also in the present disclosure, the dielectric dissipation factor of the hollow particles at a frequency of 1 GHz is preferably 0.0010 (1.0×10⁻³) or less, more preferably 9.5×10⁻⁴ or less, still more preferably 9.0×10⁻⁴ or less, and even more preferably 8.5×10⁻⁴ or less. The lower limit of the dielectric dissipation factor of the hollow particles of the present disclosure at a frequency of 1 GHz, is not particularly limited, and it may be 1.0×10⁻⁵ or more.

In the present disclosure, the relative permittivity and dielectric dissipation factor of the hollow particles are measured by use of a perturbation-type measuring device, at a measurement frequency of 1 GHz.

The void ratio of the hollow particles of the present disclosure is 50% or more, preferably 60% or more, more preferably 65% or more, and still more preferably 70% or more. When the void ratio is equal to or more than the lower limit value, the hollow particles are excellent in dielectric property and also excellent in lightness in weight, heat insulation properties and so on. The upper limit of the void ratio of the hollow particles is not particularly limited. From the viewpoint of suppressing a decrease in the strength of the hollow particles to be less likely to collapse and from the viewpoint of suppressing a decrease in the solvent resistance, the upper limit is preferably 90% or less, more preferably 85% or less, still more preferably 80% or less, and even more preferably 75% or less.

The void ratio of the hollow particles can be calculated from the apparent density D₁ and true density D₀ of the hollow particles.

A method for measuring the apparent density D₁ of the hollow particles is as follows. First, approximately 30 cm³ of the hollow particles are introduced into a measuring flask with a volume of 100 cm³, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density D₁ (g/cm³) of the hollow particles is calculated by the following formula (I). Apparent density D1 = [Mass of the hollow particles] / (100- [Mass of the isopropanol]/[Specific gravity of the isopropanol at the measuring temperature])

The apparent density D₁ is equivalent to the specific gravity of the whole hollow particle in the case where the hollow portion is regarded as a part of the hollow particle.

A method for measuring the true density D₀ of the hollow particles is as follows. The hollow particles are pulverized in advance; approximately 10 g of the pulverized hollow particles are introduced into a measuring flask with a volume of 100 cm³; and the mass of the introduced pulverized particles is precisely weighed. After that, similarly to the measurement of the apparent density mentioned above, isopropanol is added to the measuring flask; the mass of the isopropanol is precisely weighed; and the true density D₀ (g/cm³) of the hollow particles is calculated by the following formula (II). True density D0 = [Mass of the pulverized hollow particles]/(100-[Mass of the isopropanol]/[Specific gravity of the isopropanol at the measuring temperature])

The true density D₀ is equivalent to the specific gravity of the shell portion alone of the hollow particle. As is clear from the measurement method mentioned above, when calculating the true density D₀, the hollow portion is not regarded as a part of the hollow particle.

The void ratio (%) of the hollow particles is calculated by the following formula (III) from the apparent density D₁ and the true density D₀. Void ratio (%) = 100-(Apparent density D1/True density D0)×100

In the present disclosure, the lower limit of the volume average particle diameter of the hollow particles is preferably 1.0 um or more, more preferably 1.5 um or more, and still more preferably 2.0 um or more. On the other hand, the upper limit of the volume average particle diameter of the hollow particles is preferably 10.0 um or less, more preferably 8.0 um or less, and still more preferably 6.0 um or less. When the volume average particle diameter of the hollow particles is equal to or more than the lower limit value, the aggregability of the hollow particles decreases, and the hollow particles exert excellent dispersibility, accordingly. When the volume average particle diameter of the hollow particles is equal to or less than the upper limit value, shell thickness non-uniformity is suppressed, and a uniform shell is easily formed. In addition, the hollow particles are less likely to collapse, and they obtain high mechanical strength. When the volume average particle diameter is within the above range, since the particle diameter is sufficiently small, the hollow particles are preferably used as a substrate material such as an electronic circuit board, and they can be added to thin small substrates.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production.

The hollow particles of the present disclosure may have one or two or more hollow portions. From the viewpoint of maintaining good balance between the high void ratio and the mechanical strength and from the viewpoint of improving the dielectric property, the hollow particles preferably have only one hollow portion. The shell of the hollow particles of the present disclosure and, when the hollow particles have two or more hollow portions, a partition separating the adjacent hollow portions from each other may be porous. From the viewpoint of improving the dielectric property and the solvent resistance, the shell and the partition are preferably solid.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 10 shown in the diagram (5) of FIG. 1. In this example, one thin film is provided on the outside, and the interior is filled with gas.

The shape of the particles can be determined by SEM or TEM, for example.

The particle size distribution (volume average particle diameter (Dv)/number average particle diameter (Dn)) of the hollow particles may be 1.1 or more and 2.5 or less, for example. When the particle size distribution is 2.5 or less, hollow particles such that compressive strength and heat resistance slightly vary between the hollow particles, can be obtained. Also when the particle size distribution is 2.5 or less, a product having uniform thickness can be produced in the case of producing a resin molded body in a sheet form, for example.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

As the applications of the hollow particles of the present disclosure, examples include, but are not limited to, an additive used in the following, for example: members such as a low dielectric material, a heat insulation material, a sound insulation material and a light reflective material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; and filaments of 3D printers. Due to having excellent dielectric property and solvent resistance, the hollow particles of the present disclosure are preferably used as an additive for achieving low permittivity or low transmission loss in the electronics or electric field. For example, the hollow particles of the present disclosure are preferably used as a material for electronic circuit boards. More specifically, by incorporating the hollow particles of the present disclosure in the insulation resin layer of an electronic circuit board, the relative permittivity of the insulation resin layer can be decreased, and the transmission loss of the electronic circuit board can be reduced.

Also, the hollow particles of the present disclosure are preferably used as an additive used in materials for semiconductor devices. The materials are used, for example, for interlayer insulation materials, dry film resists, solder resists, bonding wires, magnet wires, semiconductor encapsulating materials, epoxy encapsulating materials, molded underfill materials, underfill materials, die bonding pastes, buffer coating materials, copper-clad laminates, flexible substrates, high frequency device modules, antenna modules and automotive radars. Of them, the hollow particles of the present disclosure are particularly preferably used as an additive used in materials for semiconductor devices, which are used for interlayer insulation materials, solder resists, magnet wires, epoxy encapsulating materials, underfill materials, buffer coating materials, copper-clad laminates, flexible substrates, high frequency device modules, antenna modules and automotive radars.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

### 3. Resin composition

The resin composition of the present disclosure contains the hollow particles of the present disclosure and a matrix resin.

The hollow particles are excellent in solvent resistance. Accordingly, the resin composition of the present disclosure preferably further contains the organic solvent since, when the resin composition is formed into a molded body, the permittivity and dielectric dissipation factor decreasing effect by the hollow particles of the present disclosure is excellent.

The matrix resin used in the liquid resin composition of the present disclosure is not particularly limited. As the matrix resin, examples include, but are not limited to, a curable resin such as a thermosetting resin, a photocurable resin and a room temperature curable resin, and a thermoplastic resin. From the point of view that the permittivity and dielectric dissipation factor decreasing effect by the hollow particles of the present disclosure is easily exerted, preferred is a matrix resin that is dispersed or dissolved in an organic solvent and used, and particularly preferred is a thermosetting resin.

The matrix resin contained in the resin composition of the present disclosure may be an unreacted monomer, a prepolymer, a macromonomer, a polymer, or a precursor of a cured resin such as polyamic acid. The matrix resin contained in the resin composition of the present disclosure functions as a binder when it is cured by, for example, heating, by light irradiation, or by use of a curing agent, a polymerization initiator, a catalyst or the like.

As the thermosetting resin, a known one may be used, and examples include, but are not limited to, phenol-based resin, melamine-based resin, urea-based resin, unsaturated polyester-based resin, epoxy-based resin, polyurethane-based resin, silicon-based resin, alkyd-based resin, thermosetting modified polyphenylene ether-based resin, thermosetting polyimide-based resin, benzoxazine-based resin, allyl-based resin, aniline-based resin, maleimide-based resin, bismaleimide triazine-based resin, liquid crystalline polyester-based resin, vinyl ester-based resin, unsaturated polyester-based resin, cyanate ester-based resin, polyetherimide resin, and uncured precursors thereof. These thermosetting resins may be used alone or in combination of two or more.

The thermosetting resin is preferably used in combination with a curing agent or a curing catalyst such as an amine, an acid anhydride and an imidazole, depending on the resin type. As a curing agent (a radical initiator) for curing thermosetting modified polyphenylene ether, for example, an organic peroxide such as 2,5-dimethyl-2,5-di-tert-butylperoxy-hexane, di-tert-butyl peroxide, dicumyl peroxide, benzoyl peroxide, 1,3-di(2-tert-butylperoxy isopropyl)benzene and 2,5-dimethyl-2,5-di-tert-butylperoxy-hexyne, is preferably used.

As the room temperature curable resin, examples include, but are not limited to, adhesives that are curable at room temperature by addition of a catalyst, such as an epoxy-based adhesive, silicone-based adhesive and an acrylic adhesive.

As the thermoplastic resin, examples include, but are not limited to, polyolefin-based resin, polyamide-based resin, polycarbonate-based resin, polyphenylene sulfide-based resin, polyether ether ketone-based resin, polystyrene-based resin, polyphenylene oxide-based resin, and liquid crystal polymers (LCP) .

These matrix resins may be used alone or in combination of two or more.

In applications that require a decrease in permittivity and dielectric dissipation factor, preferably used as the matrix resin is an insulation resin such as epoxy-based resin, thermosetting modified polyphenylene ether-based resin, thermosetting polyimide-based resin, silicon-based resin, benzoxazine-based resin, melamine-based resin, urea-based resin, allyl-based resin, phenol-based resin, unsaturated polyester-based resin, polyurethane-based resin and aniline-based resin. Of them, preferred are epoxy-based resin, thermosetting polyimide-based resin, thermosetting modified polyphenylene ether-based resin, silicon-based resin, benzoxazine-based resin and melamine-based resin. These insulation resins may be used alone or in combination of two or more.

From the point of view that the permittivity and dielectric dissipation factor decreasing effect by the hollow particles of the present disclosure is easily exerted, a resin composition containing a toluene-soluble matrix resin and toluene as the organic solvent, is preferred as the resin composition of the present disclosure. As the toluene-soluble matrix resin, examples include, but are not limited to, a thermosetting modified polyphenylene ether-based resin and a thermosetting epoxy-based resin.

The content of the matrix resin in the total content (100% by mass) of the resin composition of the present disclosure, is not particularly limited, and it is preferably from 50% by mass to 95% by mass. When the content of the matrix resin is equal to or more than the lower limit value, the resin composition exhibits excellent moldability when molded into a resin molded body, and the molded body thus obtained has excellent mechanical properties. On the other hand, when the content of the matrix resin is equal to or less than the upper limit value, the hollow particles of the present disclosure can be sufficiently contained in the resin composition. Accordingly, the permittivity and dielectric dissipation factor decreasing effect by the hollow particles of the present disclosure can be sufficiently exerted.

In the present disclosure, for example, when the matrix resin is a resin that is used in combination with a resin curing additive such as a curing agent and a curing catalyst, the content of the matrix resin also includes the content of the additive.

The content of the hollow particles of the present disclosure in the total solid content (100% by mass) of the resin composition of the present disclosure, is not particularly limited, and it is preferably from 5% by mass to 50% by mass. When the content of the hollow particles is equal to or more than the lower limit value, effects such as the permittivity and dielectric dissipation factor decreasing effect by the hollow particles of the present disclosure, can be sufficiently exerted. On the other hand, when the content of the hollow particles is equal to or less than the upper limit value, the matrix resin can be sufficiently contained in the resin composition. Accordingly, the moldability and mechanical strength of the resin composition can be improved.

From the point of view that the permittivity and dielectric dissipation factor decreasing effect by the hollow particles of the present disclosure is easily exerted, the resin composition of the present disclosure preferably contains an organic solvent before being formed into the molded body, and it preferably contains at least toluene as the organic solvent.

The resin composition of the present disclosure may contain an organic solvent other than toluene, and depending on the type of the matrix resin, it may contain an appropriately selected organic solvent. From the point of view that the permittivity and dielectric dissipation factor decreasing effect by the hollow particles of the present disclosure is easily exerted, the organic solvent contained in the resin composition of the present disclosure preferably at least contains toluene and is made of an aromatic hydrocarbon solvent, and the organic solvent is particularly preferably made of toluene.

When the resin composition of the present disclosure contains the organic solvent, the content of the organic solvent is not particularly limited. For example, with respect to 100 parts by mass of the matrix resin, the organic solvent may be from 10 parts by mass to 100 parts by mass, or it may be from 20 parts by mass to 50 parts by mass.

In addition to the hollow particles of the present disclosure and the matrix resin, as needed, the resin composition of the present disclosure may further contain additives such as a UV absorber, a colorant, a thermal stabilizer, a filler and a flame retardant, to the extent that does not impair the effects of the present disclosure.

The resin composition of the present disclosure may further contain organic or inorganic fibers such as carbon fibers, glass fibers, aramid fibers and polyethylene fibers, when it is formed into the molded body.

As the method for producing the resin composition of the present disclosure, examples include, but are not limited to, a method including the step of mixing the hollow particles produced by the production method of the present disclosure and the matrix resin.

For example, the liquid resin composition of the present disclosure is obtained by mixing the hollow particles of the present disclosure, the matrix resin, and those which are added as needed, such as the additives and the organic solvent.

The resin composition of the present disclosure may be used as the molded body.

The molded body of the resin composition of the present disclosure may be a molded body formed by solidifying the liquid resin composition into a desired form, or it may be a molded body formed by heating the resin composition containing the hollow particles of the present disclosure and the thermoplastic resin to melt the thermoplastic resin, melt-kneading the resin composition, and then molding the resin composition.

In the molded body of the resin composition, the matrix resin is a solidified product. The matrix resin as the solidified product is a resin solidified through or not through a chemical reaction, such as a resin cured by a curing reaction, a resin solidified by drying, and a resin solidified by cooling a thermoplastic resin. As needed, the molded body obtained by use of the above-described resin composition contains, as the matrix resin, a cured resin product cured by use of a curing agent, a polymerization initiator, a catalyst or the like. In this case, the matrix resin may contain a curing agent or the like. The molded body obtained by melt-kneading the hollow particles of the present disclosure and the thermoplastic resin and molding the resulting mixture, contains a solidified product as the matrix resin, which is the thermoplastic resin solidified by cooling.

In the case of melt-kneading and molding the resin composition containing the hollow particles of the present disclosure and the thermoplastic resin, a known thermoplastic resin may be used as the thermoplastic resin, without any particular limitation. As the thermoplastic resin, examples include, but are not limited to, a polyolefin such as polypropylene and polyethylene, a polyamide such as PA6, PA66 and PA12, polyimide, polyamideimide, polyetherimide, polyetherketoneketone, polyvinyl chloride, polystyrene, poly(meth)acrylate, polycarbonate, polyvinylidene fluoride, acrylonitrile-butadiene-styrene copolymer (ABS), acrylonitrile-styrene copolymer (AS), polyphenylene ether, polyphenylene sulfide, polyester, polytetrafluoroethylene, and thermoplastic elastomer. These thermoplastic resins may be used alone or in combination of two or more.

The resin molded product, which is the molded body of the resin composition of the present disclosure, is excellent in dielectric property since it contains the hollow particles of the present disclosure.

The relative permittivity of the resin molded body of the present disclosure at a frequency of 1 GHz, is preferably 2.50 or less, more preferably 2.40 or less, and still more preferably 2.30 or less. The lower limit of the relative permittivity of the resin molded body of the present disclosure at a frequency of 1 GHz, is not particularly limited, and it is generally 1.00 or more.

Also, the dielectric dissipation factor of the resin molded body of the present disclosure at a frequency of 1 GHz, is preferably 0.010 (1.0×10⁻²) or less, more preferably 5.0×10⁻³ or less, and still more preferably 4.5×10⁻³ or less. The lower limit of the dielectric dissipation factor of the resin molded body of the present disclosure at a frequency of 1 GHz, is not particularly limited, and it may be 1.0×10⁻⁵ or more, for example.

In the present disclosure, the relative permittivity and dielectric dissipation factor of the resin molded body are measured according to JIS C 2565, by use of a perturbation-type measuring device at a measurement frequency of 1 GHz.

As the method for forming the liquid resin composition of the present disclosure into a molded body, examples include, but are not limited to, the following method: the liquid resin composition of the present disclosure is applied on a support; the applied liquid resin composition is dried as needed; and then the dried resin composition is cured by heating.

As the material of the support, examples include, but are not limited to, a resin such as polyethylene terephthalate and polyethylene naphthalate, and a metal such as copper, aluminum, nickel, chromium, gold and silver.

The liquid resin composition can be applied by a known method. As the method, examples include, but are not limited to, dip coating, roll coating, curtain coating, die coating, slit coating and gravure coating.

When the resin composition contains an organic solvent, the resin composition is preferably dried after the application. From the viewpoint of removal of the organic solvent while the resin composition is in an uncured or semi-cured state, the drying temperature is preferably a temperature at which the resin composition is not cured, and it is generally 20°C or more and 200°C or less, and preferably 30°C or more and 150°C or less. The drying time is generally 30 seconds or more and 1 hour or less, and preferably 1 minute or more and 30 minutes or less.

The heating temperature for curing the resin composition is not particularly limited, and it is appropriately adjusted depending on the type of the curable resin. When the resin composition contains a heat-curable (thermosetting) resin, the heating temperature is generally 30°C or more and 400°C or less, preferably 70°C or more and 300°C or less, and more preferably 100°C or more and 200°C or less. The curing time is 5 minutes or more and 5 hours or less, and preferably 30 minutes or more and 3 hours or less. The heating method is not particularly limited. For example, an electric oven may be used.

As the method for melt-kneading the resin composition containing the hollow particles of the present disclosure and the thermoplastic resin and then forming the resin composition into a molded body, examples include, but are not limited to, the following method: the resin composition which is, for example, in the form of pellets is melt-kneaded, and then the resin composition is molded into a desired form by a known molding method such as extrusion molding, injection molding, press molding and compression molding. The temperature of the melt-kneading is not particularly limited, as long as it is a temperature at which the thermoplastic resin used can be melted. The melt-kneading can be carried out by a known method, and it is not particularly limited. For example, it can be carried out by use of a kneader such as a uniaxial or biaxial kneader.

The form of the resin molded body of the present disclosure is not particularly limited and may be any kind of form that can be formed by use of the resin composition of the present disclosure. The resin molded body can be in any form such as a sheet form, a film form, a plate form, a tube form, and various kinds of other three-dimensional forms. When the resin molded body contains fibers, the fibers in the resin molded body may be in a non-woven fabric form. Also, when the resin molded body contain fibers, the resin molded body may be a molded body of a resin composition obtained by adding the hollow particles of the present disclosure to a fiber reinforced plastic containing the resin and fibers as described above.

As the applications of the resin composition of the present disclosure and the molded body thereof, examples include, but are not limited to, those in which the resin composition can be used, among the above-mentioned applications of the hollow particles of the present disclosure.

### Examples

Hereinbelow, the present disclosure is described more specifically using examples and comparative examples. However, the present disclosure is not limited to these examples. Also, "part(s)" and "%" are on a mass basis unless otherwise specified.

### [Example 1]

### (1) Mixture liquid preparation step

First, the following materials were mixed to produce an oil phase.
DVB960 (product name, manufactured by Nippon Steel Chemical & Material Co., Ltd., divinylbenzene 96%, ethylvinylbenzene 4%): 38.7 parts
t-Butylperoxy diethylacetate (an oil-soluble polymerization initiator manufactured by Kayaku Nouryon Corporation, product name: TRIGONOX 27): 0.89 parts
Rosin acid (softening point: 150°C or more, acid value: 150 mgKOH/g to 160 mgKOH/g): 0.05 parts
Hydrophobic solvent: Heptane (solubility in water at 20°C: 2.2 mg/L) 61.3 parts

Next, in a stirring tank, an aqueous solution in which 13.72 parts of sodium hydroxide (an alkali metal hydroxide salt) was dissolved in 55 parts of deionized water, was gradually added under stirring to an aqueous solution in which 19.59 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 10 parts). The dispersion was used as an aqueous phase.

The obtained aqueous phase and oil phase were mixed, thereby preparing a mixture liquid.

### (2) Suspension step

The mixture liquid obtained in the mixture liquid preparation step was suspended with an in-line type emulsifying disperser (product name: CAVITRON, manufactured by: EUROTEC, Ltd.) at a rotor peripheral speed (the peripheral speed of the outer peripheral edge of a rotor) of 40 m/s, thereby preparing a suspension in which droplets of a monomer composition including heptane were dispersed in water.

### (3) Polymerization step

In a nitrogen atmosphere, the temperature of the suspension obtained in the suspension step was increased to 80°C. After a lapse of one hour after reaching 80°C, 5 parts of methyl ethyl ketone (MEK) (solubility in water at 20°C: 275 g/L) was added as the reaction promoting liquid to the suspension, and then the suspension was stirred for 24 hours under a temperature condition of 80°C, thereby performing a polymerization reaction. Accordingly, a precursor composition was obtained, which was a slurry solution in which precursor particles including the hydrophobic solvent were dispersed in water.

### (4) Washing step and solid-liquid separation step

The precursor composition obtained in the polymerization step was washed with dilute sulfuric acid (25°C, 10 minutes) to bring the pH of the composition to 5.5 or less. Next, water was separated therefrom by filtration. Then, 200 parts of deionized water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

### (5) Solvent removal step

The precursor particles obtained in the solid-liquid separation step were subjected to heating treatment for 6 hours with a vacuum dryer in a vacuum condition at 200°C, thereby removing the hydrophobic solvent from the particles. Accordingly, the hollow particles of Example 1 were obtained. From the scanning electron microscopy observation result and void ratio of the obtained hollow particles, the particles were confirmed to be spherical and to have a hollow portion.

### [Example 2]

The hollow particles of Example 2 were produced in the same manner as Example 1, except that in "(3) Polymerization step", 5 parts of ethyl acetate (solubility in water at 20°C: 83 g/L) was added as the reaction promoting liquid, instead of 5 parts of MEK.

### [Example 3]

The hollow particles of Example 3 were produced in the same manner as Example 1, except that in "(3) Polymerization step", the amount of the MEK added as the reaction promoting liquid was changed from 5 parts to 2 parts.

### [Example 4]

The hollow particles of Example 4 were produced in the same manner as Example 1, except that in "(3) Polymerization step", the timing to add the reaction promoting liquid was changed from "after a lapse of one hour after reaching 80°C" to "after a lapse of 8 hours after reaching 80°C".

### [Example 5]

The hollow particles of Example 5 were produced in the same manner as Example 1, except that in "(1) Mixture liquid preparation step", the amount of the added DVB960 was changed from 38.7 parts to 36.7 parts, and in "(3) Polymerization step", 2 parts of aryl methacrylate (AMA) (solubility in water at 20°C: 2.2 g/L) was added instead of 5 parts of MEK.

### [Example 6]

The hollow particles of Example 6 were produced in the same manner as Example 1, except that in "(3) Polymerization step", the amount of the added MEK was changed from 5 parts to 10 parts.

### [Example 7]

The hollow particles of Example 7 were produced in the same manner as Example 1, except that in "(1) Mixture liquid preparation step", the amount of the added DVB960 was changed from 38.7 parts to 49.6 parts, and the amount of the added polymerization initiator and the amount of the added heptane were changed according to Table 2.

### [Example 8]

The hollow particles of Example 8 were produced in the same manner as Example 1, except that in "(1) Mixture liquid preparation step", the amount of the added DVB960 was changed from 38.7 parts to 33.0 parts, and the amount of the added polymerization initiator and the amount of the added heptane were changed according to Table 2.

### [Example 9]

The hollow particles of Example 9 were produced in the same manner as Example 1, except that in "(1) Mixture liquid preparation step", the amount of the added DVB960 was changed from 38.7 parts to 37.7 parts, and 1.0 part of styrene was further added.

### [Example 10]

The hollow particles of Example 10 were produced in the same manner as Example 1, except that in "(1) Mixture liquid preparation step", the amount of the added DVB960 was changed from 38.7 parts to 32.7 parts, and 6.0 parts of styrene was further added.

### [Example 11]

The hollow particles of Example 11 were produced in the same manner as Example 1, except that in "(1) Mixture liquid preparation step", the amount of the added DVB960 was changed from 38.7 parts to 28.7 parts, and 10.0 parts of styrene was further added.

### [Example 12]

The hollow particles of Example 12 were produced in the same manner as Example 1, except that in "(3) Polymerization step", 5 parts of 3-pentanone (solubility in water at 20°C: 47 g/L) was added as the reaction promoting liquid, instead of 5 parts of MEK.

### [Example 13]

The hollow particles of Example 13 were produced in the same manner as Example 1, except that in "(3) Polymerization step", 5 parts of methyl acetate (solubility in water at 20°C: 250 g/L) was added as the reaction promoting liquid, instead of 5 parts of MEK.

### [Example 14]

The hollow particles of Example 14 were produced in the same manner as Example 1, except that in "(1) Mixture liquid preparation step", the amount of the added DVB960 was changed from 38.7 parts to 36.7 parts, and in "(3) Polymerization step", 2 parts of methyl methacrylate (solubility in water at 20°C: 15.9 g/L) was added as the reaction promoting liquid, instead of 5 parts of MEK.

### [Example 15]

The hollow particles of Example 15 were produced in the same manner as Example 1, except that in "(1) Mixture liquid preparation step", the amount of the added DVB960 was changed from 38.7 parts to 36.7 parts, and in "(3) Polymerization step", 2 parts of t-butyl aminoethyl methacrylate (solubility in water at 20°C: 18 g/L) was added as the reaction promoting liquid, instead of 5 parts of MEK.

### [Comparative Example 1]

The hollow particles of Comparative Example 1 were produced in the same manner as Example 1, except that in "(3) Polymerization step", the reaction promoting liquid was not added.

### [Comparative Example 2]

The hollow particles of Comparative Example 2 were produced in the same manner as Example 1, except that in "(3) Polymerization step", the timing to add the reaction promoting liquid was changed from "after a lapse of one hour after reaching 80°C" to "before increasing the temperature of the suspension".

### [Comparative Example 3]

The hollow particles of Comparative Example 3 were produced in the same manner as Example 1, except that in "(1) Mixture liquid preparation step", the amount of the added DVB960 was changed from 38.7 parts to 33.7 parts, and in "(3) Polymerization step", 5 parts of styrene (St) (solubility in water at 20°C: 0.3 g/L) was added instead of 5 parts of MEK.

### [Comparative Example 4]

The hollow particles of Comparative Example 4 were produced in the same manner as Example 1 in Patent Document 2.

First, an oil phase was produced by mixing the following materials.
Styrene: 1.15 parts
DVB810 (product name, manufactured by Nippon Steel Chemical & Material Co., Ltd., divinylbenzene 81%, ethylvinylbenzene 19%): 1.85 parts
Heptane: 2.4 parts
HS CRYSTA 4100 (product name, side-chain crystalline polyolefin manufactured by Hokoku Corporation): 0.3 parts
BLEMMER 50 PEP-300 (product name, polyethylene glycolpropylene glycol monomethacrylate manufactured by NOF Corporation): 0.3 parts
PEROYL L (product name, polymerization initiator manufactured by NOF Corporation): 0.099 parts

Next, an aqueous phase was produced by mixing 34 parts of deionized water and 0.017 parts of RAPISOL A-80 (surfactant, NOF Corporation).

The oil phase was added to the aqueous phase, and a suspension was prepared by use of a ultrasonic homogenizer. The suspension thus obtained was heated at 70°C for 4 hours for polymerization, thereby obtaining a slurry. The obtained slurry was heated at 100°C for 24 hours, thereby obtaining the hollow particles of Comparative Example 4.

### <Measurement of polymerization conversion rate>

In the polymerization step of the examples and comparative examples, 50 g of the suspension at the time of adding the reaction promoting liquid was taken and subjected to pressure filtration, thereby obtaining the particles (containing water and the hydrophobic solvent) contained in the suspension.

About 3 g of the particles obtained by the pressure filtration were taken. Next, 27 g of ethyl acetate was added thereto, and they were stirred for 15 minutes. Then, 13 g of methanol was added thereto, and they were mixed for 10 minutes. A solution thus obtained was left to stand to deposit an insoluble component, and the supernatant of the solution was collected as a measurement sample. Next, 2 µL of the measurement sample was injected into a gas chromatograph, and the amount of the polymerizable monomer in the measurement sample was quantified by gas chromatography (GC) in the following condition. The quantified amount was regarded as the mass of the unreacted polymerizable monomer at the time of adding the reaction promoting liquid.

Also, the particles obtained by the pressure filtration were dried at 200°C for two hours for removal of the water and the hydrophobic solvent, and the mass of the solid component of the particles produced at the time of adding the reaction promoting liquid, was obtained.

Then, the polymerization conversion rate was calculated by the following formula (B). Polymerization conversion rate (% by mass) = 100-{[Mass of the unreacted polymerizable monomer]/[Mass of the solid component of the particles produced at the time of adding the reaction promoting liquid]+[Mass of the unreacted polymerizable monomer])}×100

### <Condition of GC>

Column: TC-WAX (0.25 mm × 30 m)
Column temperature: 80°C
Injection temperature: 200°C
FID detection side temperature: 200°C

### [Evaluation]

The hollow particles obtained in the examples and the comparative examples were measured and evaluated as follows. The results are shown in Tables 1 to 3.

### 1. Density and void ratio of the hollow particles

### 1-1. Measurement of the apparent density of the hollow particles

First, approximately 30 cm³ of the hollow particles were introduced into a measuring flask with a volume of 100 cm³, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density D₁ (g/cm³) of the hollow particles was calculated by the following formula (I). Apparent density D1 = [Mass of the hollow particles]/(100- [Mass of the isopropanol]/[Specific gravity of the isopropanol at the measuring temparature])

### 1-2. Measurement of the true density of the hollow particles

The hollow particles were pulverized in advance; approximately 10 g of the pulverized hollow particles were introduced into a measuring flask with a volume of 100 cm³; and the mass of the introduced pulverized particles was precisely weighed.

Then, similarly to the measurement of the apparent density mentioned above, isopropanol was added to the measuring flask; the mass of the isopropanol was precisely weighed; and the true density D₀ (g/cm³) of the hollow particles was calculated by the following formula (II). True density D0 = [Mass of the pulverized hollow particles]/(100-[Mass of the isopropanol]/[Specific gravity of the isopropanol at the measuring temperature])

### 1-3. Calculation of void ratio

The void ratio of the hollow particles was calculated by the following formula (III) from the apparent density D₁ and the true density D₀. Void ratio (%) = 100-(Apparent density D1/True density D0)×100

### 2. Measurement of volume average particle diameter (Dv) and number average particle diameter (Dn), and calculation of particle size distribution (Dv/Dn)

The volume average particle diameter (Dv) and number average particle diameter (Dn) of the hollow particles were measured with a particle size distribution measuring device (product name: MULTISIZER 4e, manufactured by: Beckman Coulter, Inc.), and the particle size distribution (Dv/Dn) was calculated. The measurement condition is as follows.
Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

### 3. Measurement of the relative permittivity (Dk) and dielectric dissipation factor (Df) of the hollow particles

Using a perturbation-type measuring device (manufactured by: AET Inc., model: ADMS01Nc), the relative permittivity and dielectric dissipation factor of the hollow particles were measured at a frequency of 1 GHz and at room temperature (25°C) .

### 4. Immersion test (toluene resistance)

In an environment at 25°C, 0.1 mg of the hollow particles were added to 4 mL of toluene, and they were shaken for 10 minutes at a shaking rate of 100 rpm by use of a shaking device, thereby obtaining a mixture. The mixture was left to stand for 48 hours, and the percentage the hollow particles that submerged in the toluene was obtained. The result was evaluated by the following evaluation criteria. The hollow particles that submerged in the toluene were separated by a centrifuge and dried, and the mass of the hollow particles that submerged in the toluene was measured. The percentage of the hollow particles that submerged in the toluene was obtained by calculating the percentage of the mass of the hollow particles that submerged in the toluene with respect to the mass of the whole hollow particles immersed in the toluene.

### (Evaluation criteria of the immersion test)

AA: The hollow particles that submerged were less than 1% by mass.
A: The hollow particles that submerged were 1% by mass or more and less than 3% by mass.
B: The hollow particles that submerged were 3% by mass or more and less than 5% by mass.
C: The hollow particles that submerged were 5% by mass or more.

### 5. Measurement of the relative permittivity (Dk) and dielectric dissipation factor (Df) of PPE film containing the hollow particles

### 5-1. Production of PPE film containing the hollow particles

First, 20 g of 65% toluene solution of polyphenylene ether (PPE) (product name: OPE-2200, manufactured by: Mitsubishi Gas Chemical Company, Inc.) was measured in a cup, and 1.50 g of the hollow particles and 0.15 g of PERCUMYL (registered trademark) D (manufactured by NOF Corporation) were added thereto. The mixture thus-obtained was uniformly dispersed in a planetary centrifugal mixer (product name: MAZERUSTAR, manufactured by: Kurabo Industries Ltd.), thereby obtaining a resin composition. An aluminum foil was attached to a glass plate without shrinkage. On the attached aluminum foil, the obtained resin composition was applied by use of bar coater No. 75 to form a coating film. Under a nitrogen atmosphere, the coating film was cured by heating at 80°C for one hour, 120°C for 30 minutes and then 160°C for one hour, thereby forming a PPE film containing the hollow particles on the aluminum foil. The thus-obtained laminate of the film and the aluminum foil was immersed overnight in a 1 N hydrochloric acid aqueous solution to remove the aluminum foil, thereby obtaining the film only. The obtained film was washed with deionized water and dried, thereby obtaining the PPE film containing the hollow particles.

### 5-2. Measurement of the relative permittivity (Dk) and dielectric dissipation factor (Df) of the film

A measurement sample was obtained by cutting the PPE film containing the hollow particles into a size of 3 mm (width) and 80 mm (length). According to JIS C 2565, using a perturbation-type measuring device (manufactured by: AET Inc., model: ADMS01Nc), the relative permittivity and dielectric dissipation factor of the PPE film containing the hollow particles were measured at a frequency of 1 GHz and at room temperature (25°C).

As Reference Example 1, the relative permittivity and dielectric dissipation factor of a PPE film not containing hollow particles were measured in the same manner as above.

### [Table 1]

**Table 1**

| | | Example 1 | Example 2 | Example 3 | Example 4 | Example 5 | Example 6 |
|---|---|---|---|---|---|---|---|
| Polymerizable monomer | Divinylbenzene (parts) | 37.15 | 37.15 | 37.15 | 37.15 | 35.23 | 37.15 |
| | Ethylvinylbenzene (parts) | 1.55 | 1.55 | 1.55 | 1.55 | 1.47 | 1.55 |
| Hydrophobic solvent | Heptane (parts) | 61.3 | 61.3 | 61.3 | 61.3 | 61.3 | 61.3 |
| Additive | Rosin acid (parts) | 0.05 | 0.05 | 0.05 | 0.05 | 0.05 | 0.05 |
| Polymerization initiator | Type | TRIGONOX 27 | TRIGONOX 27 | TRIGONOX 27 | TRIGONOX 27 | TRIGONOX 27 | TRIGONOX 27 |
| | (Parts) | 0.89 | 0.89 | 0.89 | 0.89 | 0.89 | 0.89 |
| Reaction promoting liquid | Type | MEK | Ethyl acetate | MEK | MEK | AMA | MEK |
| | (Parts) | 5 | 5 | 2 | 5 | 2 | 10 |
| | Timing to add | After a lapse of 1 hour after reaching 80°C | After a lapse of 1 hour after reaching 80°C | After a lapse of 1 hour after reaching 80°C | After a lapse of 8 hours after reaching 80°C | After a lapse of 1 hour after reaching 80°C | After a lapse of 1 hour after reaching 80°C |
| | Polymerization conversion rate when added | 49% | 50% | 56% | 84% | 52% | 49% |
| Polymerization condition | Polymerization temperature | 80°C | 80°C | 80°C | 80°C | 80°C | 80°C |
| Dispersion stabilizer | Type | Mg(OH)₂ | Mg(OH)₂ | Mg(OH)₂ | Mg(OH)₂ | Mg(OH)₂ | Mg(OH)₂ |
| | (Parts) | 10 | 10 | 10 | 10 | 10 | 10 |
| Properties of hollow particles | Void ratio (%) | 70 | 70 | 70 | 70 | 70 | 70 |
| | Dv (µm) | 3.0 | 3.1 | 2.6 | 3.2 | 3.1 | 3.0 |
| | Dn (µm) | 2.1 | 2.1 | 1.8 | 2.6 | 2.1 | 2.0 |
| | Dv/Dn | 1.4 | 1.5 | 1.5 | 1.8 | 1.5 | 1.5 |
| | Particles' Dk @ 1 GHz | 1.37 | 1.37 | 1.36 | 1.39 | 1.41 | 1.39 |
| | Particles' Df @ 1 GHz | 7.7E-04 | 7.1E-04 | 6.9E-04 | 7.4E-04 | 9.4E-04 | 7.5E-04 |
| | Toluene resistance | AA | AA | AA | A | A | A |
| Properties of PPE film | PPE film's Dk @ 1 GHz | 2.22 | 2.22 | 2.20 | 2.23 | 2.24 | 2.23 |
| | PPE film's Df @ 1 GHz | 4.5E-03 | 4.3E-03 | 4.0E-03 | 4.40E-03 | 4.8E-03 | 4.40E-03 |

### [Table 2]

**Table 2**

| | | Example 7 | Example 8 | Example 9 | Example 10 |
|---|---|---|---|---|---|
| | DVB960 | 49.6 | 33.0 | 37.7 | 32.7 |
| Polymerizable monomer | Divinylbenzene (parts) | 47.62 | 31.68 | 36.19 | 31.39 |
| | Ethylvinylbenzene (parts) | 1.98 | 1.32 | 1.51 | 1.31 |
| | Styrene (parts) | | | 1.0 | 6.0 |
| Hydrophobic solvent | Heptane (parts) | 50.4 | 67.0 | 61.3 | 61.3 |
| Additive | Rosin acid (parts) | 0.05 | 0.05 | 0.05 | 0.05 |
| Polymerization initiator | Type | TRIGONOX 27 | TRIGONOX 27 | TRIGONOX 27 | TRIGONOX 27 |
| | (Parts) | 1.14 | 0.76 | 0.89 | 0.89 |
| Reaction promoting liquid | Type | MEK | MEK | MEK | MEK |
| | (Parts) | 5 | 5 | 5 | 5 |
| | Timing to add | After a lapse of 1 hour after reaching 80°C | After a lapse of 1 hour after reaching 80°C | After a lapse of 1 hour after reaching 80°C | After a lapse of 1 hour after reaching 80°C |
| | Polymerization conversion rate when added | 42% | 61% | 49% | 54% |
| Polymerization condition | Polymerization temperature | 80°C | 80°C | 80°C | 80°C |
| Dispersion stabilizer | Type | Mg(OH)₂ | Mg(OH)₂ | Mg(OH)₂ | Mg(OH)₂ |
| | (Parts) | 10 | 10 | 10 | 10 |
| Properties of hollow particles | Void ratio (%) | 60 | 75 | 70 | 70 |
| | Dv (µm) | 2.7 | 3.0 | 3.0 | 3.2 |
| | Dn (µm) | 1.9 | 2.1 | 2.1 | 2.1 |
| | Dv/Dn | 1.4 | 1.4 | 1.4 | 1.5 |
| | Particles' Dk @ 1 GHz | 1.48 | 1.31 | 1.36 | 1.36 |
| | Particles' Df @ 1 GHz | 9.8E-04 | 5.9E-04 | 7.0E-04 | 6.8E-04 |
| | Toluene resistance | AA | B | AA | A |
| Properties of PPE film | PPE film's Dk @ 1 GHz | 2.30 | 2.18 | 2.20 | 2.20 |
| | PPE film's Df @ 1 GHz | 4.80E-03 | 3.90E-04 | 4.40E-03 | 4.20E-03 |

**Table 2-continued**

| | | Example 11 | Example 12 | Example 13 | Example 14 | Example 15 |
|---|---|---|---|---|---|---|
| | DVB960 | 28.7 | 38.7 | 38.7 | 36.7 | 36.7 |
| Polymerizable monomer | Divinylbenzene (parts) | 27.55 | 37.15 | 37.15 | 35.23 | 35.23 |
| | Ethylvinylbenzene (parts) | 1.15 | 1.55 | 1.55 | 1.47 | 1.47 |
| | Styrene (parts) | 10.0 | | | | |
| Hydrophobic solvent | Heptane (parts) | 61.3 | 61.3 | 61.3 | 61.3 | 61.3 |
| Additive | Rosin acid (parts) | 0.05 | 0.05 | 0.05 | 0.05 | 0.05 |
| Polymerization initiator | Type | TRIGONOX 27 | TRIGONOX 27 | TRIGONOX 27 | TRIGONOX 27 | TRIGONOX 27 |
| | (Parts) | 0.89 | 0.89 | 0.89 | 0.89 | 0.89 |
| Reaction promoting liquid | Type | MEK | 3-Pentanone | Methyl acetate | MMA | t-BAEMA |
| | (Parts) | 5 | 5 | 5 | 2 | 2 |
| | Timing to add | After a lapse of 1 hour after reaching 80°C | After a lapse of 1 hour after reaching 80°C | After a lapse of 1 hour after reaching 80°C | After a lapse of 1 hour after reaching 80°C | After a lapse of 1 hour after reaching 80°C |
| | Polymerization conversion rate when added | 64% | 50% | 50% | 50% | 50% |
| Polymerization condition | Polymerization temperature | 80°C | 80°C | 80°C | 80°C | 80°C |
| Dispersion stabilizer | Type | Mg(OH)₂ | Mg(OH)₂ | Mg(OH)₂ | Mg(OH)₂ | Mg(OH)₂ |
| | (Parts) | 10 | 10 | 10 | 10 | 10 |
| Properties of hollow particles | Void ratio (%) | 70 | 70 | 70 | 70 | 70 |
| | Dv (µm) | 3.2 | 2.9 | 3.0 | 2.8 | 2.9 |
| | Dn (µm) | 2.1 | 2.0 | 2.0 | 2.0 | 2.0 |
| | Dv/Dn | 1.5 | 1.5 | 1.5 | 1.4 | 1.5 |
| | Particles' Dk @ 1 GHz | 1.35 | 1.36 | 1.36 | 1.36 | 1.36 |
| | Particles' Df @ 1 GHz | 7.1E-04 | 7.1E-04 | 7.0E-04 | 9.2E-04 | 9.0E-04 |
| | Toluene resistance | B | AA | AA | AA | AA |
| Properties of PPE film | PPE film's Dk @ 1 GHz | 2.19 | 2.21 | 2.21 | 2.21 | 2.21 |
| | PPE film's Df @ 1 GHz | 4.30E-03 | 4.30E-03 | 4.30E-03 | 4.60E-03 | 4.60E-03 |

### [Table 3]

**Table 3**

| | | Comparative Example 1 | Comparative Example 2 | Comparative Example 3 | Comparative Example 4 | Reference Example 1 |
|---|---|---|---|---|---|---|
| Polymerizable monomer | Divinylbenzene (parts) | 37.15 | 37.15 | 32.35 | 1.50 | |
| | Ethylvinylbenzene (parts) | 1.55 | 1.55 | 1.35 | 0.35 | |
| | Styrene (parts) | | | | 1.15 | |
| | BLEMMER 50PEP-300 (parts) | | | | 0.3 | |
| Hydrophobic solvent | Heptane (parts) | 61.3 | 61.3 | 61.3 | 2.4 | |
| Additive | Rosin acid (parts) | 0.05 | 0.05 | 0.05 | | |
| | HS CRYSTA 4100 (parts) | | | | 0.3 | |
| Polymerization initiator | Type | TRIGONOX 27 | TRIGONOX 27 | TRIGONOX 27 | PEROYL L | |
| | (Parts) | 0.89 | 0.89 | 1.49 | 0.099 | |
| Reaction promoting liquid | Type | | MEK | ST | | |
| | (Parts) | | 5 | 5 | | |
| | Timing to add | | Before polymerization reaction | After a lapse of 1 hour after reaching 80°C | | |
| | Polymerization conversion rate when added | | 0% | 52% | | |
| Polymerization condition | Polymerization temperature | 80°C | 80°C | 80°C | 70°C | |
| Dispersion stabilizer | Type | Mg(OH)₂ | Mg(OH)₂ | Mg(OH)₂ | A-80 | |
| | (Parts) | 10 | 10 | 10 | 0.017 | |
| Properties of hollow particles | Void ratio (%) | 61 | 68 | 73 | 35 | |
| | Dv (µm) | 2.6 | 2.6 | 2.9 | 0.4 | |
| | Dn (µm) | 1.8 | 1.8 | 2.0 | 0.3 | |
| | Dv/Dn | 1.5 | 1.5 | 1.4 | 1.3 | |
| | Particles' Dk @ 1 GHz | 1.47 | 1.47 | 1.44 | 1.80 | |
| | Particles' Df @ 1 GHz | 7.5E-04 | 7.5E-04 | 6.4E-04 | 7.0E-03 | |
| | Toluene resistance | C | C | C | C | |
| Properties of PPE film | PPE film's Dk @ 1 GHz | 2.31 | 2.32 | 2.28 | 2.54 | 2.57 |
| | PPE film's Df @ 1 GHz | 5.4E-03 | 5.50E-03 | 5.5E-03 | 6.0E-03 | 6.0E-03 |

In Tables 1 to 3, for simplification, the dielectric dissipation factor (Df) values are expressed by using the exponent notation defined in JIS X 0210. For example, the term "7.7×10⁻⁴" is expressed as "7.7E-04".

### [Consideration]

The hollow particles obtained in Comparative Examples 1 to 3 were such particles, that the void ratio was 50% or more; the shell contained the polymer in which 70% by mass or more of a crosslinkable hydrocarbon monomer unit was contained. Meanwhile, in Comparative Examples 1 to 3, 5% by mass or more of the hollow particles submerged in the toluene in the hollow particle immersion test. Accordingly, while being low in relative permittivity and dielectric dissipation factor, the hollow particles obtained in Comparative Examples 1 to 3 were less effective in decreasing the permittivity and dielectric dissipation factor of the PPE film. Comparative Examples 1 to 3 were estimated as follows: the permittivity and dielectric dissipation factor of the PPE film could not be sufficiently decreased since, in the process of producing the PPE film, the toluene in the resin composition penetrated the hollow particles and remained in the hollow particles of the obtained PPE film. Furthermore, Comparative Example 1 was estimated as follows: a shell with excellent solvent resistance was not formed since there was no addition of the reaction promoting liquid in the polymerization step and, accordingly, the crosslinking reaction of the shell was not promoted. Comparative Example 2 was estimated as follows: a shell with excellent solvent resistance was not formed since the reaction promoting liquid was added before the polymerization reaction and, accordingly, the effect of promoting the crosslinking reaction of the shell by the reaction promoting liquid was not exerted. Comparative Example 3 was estimated as follows: a shell with excellent solvent resistance was not formed since, while styrene was added instead of the reaction promoting liquid in the polymerization step, styrene has low solubility in water and failed to enter the interior of the shell and, accordingly, the effect of promoting the crosslinking reaction of the shell was not obtained.

Comparative Example 4 corresponds to Example 1 in Patent Document 2. The hollow particles obtained in Comparative Example 4 were such particles, that the void ratio was less than 50%; the crosslinkable hydrocarbon monomer unit in the polymer contained in the shell was less than 70% by mass; and in the immersion test, the hollow particles that submerged in the toluene were 5% by mass or more. Accordingly, the hollow particles obtained in Comparative Example 4 were high in relative permittivity and dielectric dissipation factor, poor in solvent resistance, and less effective in decreasing the permittivity and dielectric dissipation factor of the PPE film. The high relative permittivity and dielectric dissipation factor of the hollow particles obtained in Comparative Example 4 were estimated to be due to their low void ratio, and the poor solvent resistance thereof was estimated to be due to the insufficient crosslinking density of the shell. Comparative Example 4 was estimated as follows: the permittivity and dielectric dissipation factor of the PPE film were not sufficiently decreased since the hollow particles' own dielectric property were poor; the solvent resistance of the hollow particles was insufficient; and in the process of producing the PPE film, the toluene in the resin composition permeated the hollow particles and remained in the hollow particles in the obtained PPE film.

Meanwhile, the hollow particles obtained in Examples 1 to 15 were such particles, that the void ratio was 50% or more; the shell contained the polymer in which 70% by mass or more of a crosslinkable hydrocarbon monomer unit was contained; in the hollow particle immersion test, less than 5% by mass of the hollow particles submerged in the toluene; the relative permittivity and the dielectric dissipation factor were low; and they were effective in decreasing the permittivity and dielectric dissipation factor of the PPE film. In Examples 1 to 15, in 100% by mass of the polymerizable monomer contained in the mixture liquid, the content of a crosslinkable hydrocarbon monomer was 70% by mass or more, and the reaction promoting liquid was added during the polymerization reaction. Accordingly, hollow particles excellent in dielectric property and solvent resistance were obtained. Examples 1 to 15 were estimated as follows: since the content of the hydrocarbon monomer in the polymerizable monomer was sufficiently large, the shell thus formed had a resin composition excellent in dielectric property; moreover, since the content of the crosslinkable monomer in the polymerizable monomer was sufficiently large, and the crosslinking reaction of the shell was promoted by the addition of the reaction promoting liquid, the shell thus formed was a shell with high crosslinking density, and the obtained hollow particles were excellent in dielectric property and solvent resistance, accordingly.

Also, Examples 1 to 15 were estimated as follows: the hollow particles' own dielectric property were excellent; the hollow particles were excellent in solvent resistance; the toluene in the resin composition was less likely to permeate the hollow particles in the process of producing the PPE film; almost no toluene remained in the hollow particles of the obtained PPE film or no toluene remained therein; and the hollow particles had an excellent effect of decreasing the permittivity and dielectric dissipation factor of the PPE film, accordingly.

### Reference Signs List

1. Aqueous medium
2. Low polarity material
4a. Hydrophobic solvent
4b. Material not containing hydrophobic solvent
6. Shell
7. Hollow portion
8. Droplet
9. Precursor particle
10. Hollow particle having a gas-filled hollow portion

## Claims

1. Hollow particles which comprise a shell containing a resin and a hollow portion surrounded by the shell and which have a void ratio of 50% or more,
wherein the shell contains, as the resin, a polymer in which 70% by mass or more of a crosslinkable hydrocarbon monomer unit is contained, and
wherein, in a hollow particle immersion test in which a mixture obtained by adding 0.1 mg of the hollow particles to 4 mL of toluene and shaking them for 10 minutes at a shaking rate of 100 rpm, is left to stand for 48 hours in an environment at 25°C, less than 5% by mass of the hollow particles submerge in the toluene.

2. The hollow particles according to Claim 1, wherein a dielectric dissipation factor at a frequency of 1 GHz is 0.0010 or less.

3. The hollow particles according to Claim 1 or 2, wherein the void ratio is 60% or more.

4. The hollow particles according to any one of Claims 1 to 3, wherein a volume average particle diameter is 1.0 um or more and 10.0 um or less.

5. A method for producing hollow particles which comprise a shell containing a resin and a hollow portion surrounded by the shell and which have a void ratio of 50% or more,
the method comprising:
preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
preparing a precursor composition containing precursor particles which have a hollow portion surrounded by a shell containing a resin and which include the hydrophobic solvent in the hollow portion, by subjecting the suspension to a polymerization reaction,
wherein, in 100% by mass of the polymerizable monomer contained in the mixture liquid, a content of a crosslinkable hydrocarbon monomer is 70% by mass or more, and
wherein, in the preparation of the precursor composition, a reaction promoting liquid is added during the polymerization reaction; the polymerization reaction is then further continued; and as the reaction promoting liquid, a low-molecular compound in which a solubility in water at 20°C is larger than that of the hydrophobic solvent and is from 0.5 g/L to 1000 g/L, is used.

6. The method for producing the hollow particles according to Claim 5,
wherein, when an unreactive low-molecular compound is added as the reaction promoting liquid, with respect to a total mass (100 parts by mass) of the polymerizable monomer and hydrophobic solvent contained in the mixture liquid, an amount of the added unreactive low-molecular compound is from 1 part by mass to 20 parts by mass, and
wherein, when a reactive low-molecular compound is added as the reaction promoting liquid, with respect to the total mass (100 parts by mass) of the polymerizable monomer and hydrophobic solvent contained in the mixture liquid, an amount of the added reactive low-molecular compound is from 1 part by mass to 3 parts by mass.

7. The method for producing the hollow particles according to Claim 5 or 6, wherein, in the preparation of the precursor composition, the reaction promoting liquid is added when a polymerization conversion rate of the polymerizable monomer contained in the mixture liquid is from 40% to 90%.

8. The method for producing the hollow particles according to any one of Claims 5 to 7, wherein the hydrophobic solvent is a chain hydrocarbon solvent.

9. The method for producing the hollow particles according to any one of Claims 5 to 8, wherein the polymerization initiator is an organic peroxide.

10. A resin composition comprising the hollow particles defined by any one of Claims 1 to 4 and a matrix resin.

11. A molded body of a resin composition comprising the hollow particles defined by any one of Claims 1 to 4 and a matrix resin.
